(19) **Europäisches Patentamt / European Patent Office / Office européen des brevets**

(11) **EP 4 383 696 A1**

(12) # EUROPEAN PATENT APPLICATION
published in accordance with Art. 153(4) EPC

(43) Date of publication:
**12.06.2024 Bulletin 2024/24**

(21) Application number: **22864944.8**

(22) Date of filing: **23.08.2022**

(51) International Patent Classification (IPC):
*H04N 5/14* (2006.01)   *G06T 7/246* (2017.01)
*G06N 3/08* (2023.01)   *G06N 3/04* (2023.01)

(52) Cooperative Patent Classification (CPC):
**G06N 3/04; G06N 3/08; G06T 7/246; H04N 5/14**

(86) International application number:
**PCT/KR2022/012599**

(87) International publication number:
**WO 2023/033441 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2021 KR 20210115025**

(71) Applicant: **Samsung Electronics Co., Ltd.**
**Suwon-si, Gyeonggi-do 16677 (KR)**

(72) Inventors:
• **LEE, Youjin**
  **Suwon-si, Gyeonggi-do 16677 (KR)**

• **PARK, Yongsup**
  **Suwon-si, Gyeonggi-do 16677 (KR)**
• **LEE, Sangmi**
  **Suwon-si, Gyeonggi-do 16677 (KR)**
• **KIM, Gyehyun**
  **Suwon-si, Gyeonggi-do 16677 (KR)**
• **KIM, Beomseok**
  **Suwon-si, Gyeonggi-do 16677 (KR)**
• **PARK, Youngo**
  **Suwon-si, Gyeonggi-do 16677 (KR)**
• **JANG, Taeyoung**
  **Suwon-si, Gyeonggi-do 16677 (KR)**
• **CHOI, Kwangpyo**
  **Suwon-si, Gyeonggi-do 16677 (KR)**

(74) Representative: **Appleyard Lees IP LLP**
**15 Clare Road**
**Halifax HX1 2HY (GB)**

(54) **IMAGE PROCESSING DEVICE DETERMINING MOTION VECTOR BETWEEN FRAMES, AND METHOD THEREBY**

(57) Disclosed is an image processing device configured to obtain a plurality of difference maps between a first frame or a first feature map corresponding to the first frame, and a plurality of second feature maps corresponding to a second frame, obtain a plurality of third feature maps and a plurality of fourth feature maps by performing pooling processes on the plurality of difference maps according to a first size and a second size, obtain a plurality of modified difference maps by weighted-summing the plurality of third feature maps and the plurality of fourth feature maps, identify any one collocated sample by considering sizes of sample values of collocated samples of the plurality of modified difference maps corresponding to a current sample of the first frame, and determine a filter kernel used to obtain the second feature map corresponding to the modified difference map including the identified collocated sample, as a motion vector of the current sample.

FIG. 18

**Description**

Technical Field

The present disclosure relates to image or frame processing. More particularly, the present disclosure relates to processing multiple images or multiple frames based on a neural network.

Background Art

There are various technologies for processing an image before encoding or displaying the image. Image processing is technology for processing all types of information that is input/output as an image, and refers to a technology for processing and modifying an image for better human understanding or secondary applications, such as image enhancement, emphasis, or compression.
Image processing technologies have been developed based on an algorithm, and with the recent development of artificial intelligence, a large part of image processing has been performed based on artificial intelligence. A representative example of an artificial intelligence model is a neural network.
Neural networks may be trained based on training data. A neural network may obtain a desired processing result by processing an image by using weighting values set through training. However, neural network-based image processing has so far been ineffective in processing temporally related multiple frames.

Disclosure

Technical Problem

An objective of an embodiment is to effectively process frames by considering a temporal correlation between multiple frames.
In addition, an objective of an embodiment is to accurately determine a motion vector between frames.

Technical Solution

An image processing device according to an embodiment an image processing device includes: a memory storing one or more instructions; and a processor configured to execute the one or more instructions stored in the memory to obtain a plurality of difference maps between a first frame or a first feature map corresponding to the first frame, and a plurality of second feature maps corresponding to a second frame, obtain a plurality of third feature maps and a plurality of fourth feature maps by performing pooling processes on the plurality of difference maps according to a first size and a second size, obtain a plurality of modified difference maps by weighted-summing the plurality of third feature maps and the plurality of fourth feature maps, identify any one collocated sample by considering sizes of sample values of collocated samples of the plurality of modified difference maps corresponding to a current sample of the first frame, and determine a filter kernel used to obtain the second feature map corresponding to the modified difference map including the identified collocated sample, as a motion vector of the current sample.

Advantageous Effects

An image processing device and method according to an embodiment may improve processing performance of a current frame by processing the current frame based on a temporal correlation between the current frame and a previous frame.
In addition, the image processing device and method according to an embodiment may derive, from frames, a motion vector with excellent robustness against noise.
However, effects that may be achieved by the image processing device and a method performed thereby according to an embodiment are not limited to the above-mentioned effects, and other effects that are not mentioned may be clearly understood by those skilled in the art from the following description.

Description of Drawings

In order to more fully understand the drawings referenced herein, a brief description of each drawing is provided.

FIG. 1 is a diagram illustrating a configuration of an image processing device according to an embodiment.

FIG. 2 is a diagram illustrating processing of a current frame, according to an embodiment.

FIG. 3 is a diagram for describing a convolution operation.

FIG. 4 is a diagram for describing a motion prediction process illustrated in FIG. 2.

FIG. 5 is an example diagram illustrating a convolution operation applied to a current frame for motion prediction.

FIG. 6 is an example diagram illustrating a convolution operation applied to a previous frame for motion prediction.

FIG. 7 is an example diagram illustrating prediction samples corresponding to samples in a current frame.

FIG. 8 is a diagram for describing a motion compensation process illustrated in FIG. 2.

FIG. 9 is an example diagram illustrating a process of performing motion compensation on a previous frame by using a motion prediction result.

FIG. 10 is an example diagram illustrating a process of applying weights to a prediction frame obtained as a result of motion compensation.

FIG. 11 is a diagram for describing a method of increasing the number of motion vectors obtained from a downsampled frame.

FIG. 12 is a diagram illustrating a structure of a first sub-neural network included in a neural network.

FIG. 13 is a diagram illustrating a structure of a last sub-neural network included in a neural network.

FIG. 14 is a diagram illustrating an application example of an image processing method, according to an embodiment.

FIG. 15 is a diagram illustrating an application example of an image processing method, according to another embodiment.

FIG. 16 is a diagram illustrating an application example of an image processing method, according to another embodiment.

FIG. 17 is a flowchart of a method of processing multiple frames, according to an embodiment.

FIG. 18 is a diagram illustrating a configuration of an image processing device according to another embodiment.

FIG. 19 is a diagram for describing convolution processing on a first frame.

FIG. 20 is a diagram for describing convolution processing on a second frame.

FIG. 21 is a diagram for describing a method of obtaining a difference map between a first feature map and a second feature map.

FIG. 22 is a diagram for describing pooling on a difference map.

FIG. 23 is a diagram for describing a method of combining a third feature map, a fourth feature map, and a fifth feature map that are obtained through pooling.

FIG. 24 is a diagram for describing a method of determining motion vectors from modified difference maps.

FIG. 25 is a diagram illustrating samples in a frame used in a convolution operation with a first filter kernel and a second filter kernel.

FIG. 26 is a diagram for describing a method of training a neural network to output weights for combining feature maps obtained through pooling.

FIG. 27 is a flowchart for describing an image processing method according to another embodiment.

Best Mode

An image processing device according to an embodiment an image processing device includes: a memory storing one or more instructions; and a processor configured to execute the one or more instructions stored in the memory to obtain a plurality of difference maps between a first frame or a first feature map corresponding to the first frame, and a plurality of second feature maps corresponding to a second frame, obtain a plurality of third feature maps and a plurality of fourth feature maps by performing pooling processes on the plurality of difference maps according to a first size and a second size, obtain a plurality of modified difference maps by weighted-summing the plurality of third feature maps and the plurality of fourth feature maps, identify any one collocated sample by considering sizes of sample values of collocated samples of the plurality of modified difference maps corresponding to a current sample of the first frame, and determine a filter kernel used to obtain the second feature map corresponding to the modified difference map including the identified collocated sample, as a motion vector of the current sample.

A first stride used in the pooling process based on the first size and a second stride used in the pooling process based on the second size may be different from each other.

The first size and the first stride may be greater than the second size and the second stride.

The first size and the first stride may be k (k is a natural number), and the second size and the second stride may be k/2.

The processor may obtain, from a neural network, a first weight applied to the plurality of third feature maps, and a second weight applied to the plurality of fourth feature maps.

The processor may obtain a plurality of modified difference maps by weighted-summing the plurality of third feature maps and the plurality of fourth feature maps, based on a first preliminary weight and a second preliminary weight that are output from the neural network, determine motion vectors corresponding to samples of the first frame, from the plurality of modified difference maps, and motion-compensate the second frame based on the determined motion vectors, and the neural network may be trained based on first loss information corresponding to a difference between the motion-compensated second frame and the first frame.

The neural network may be trained further based on second loss information indicating how much a sum of the first preliminary weight and the second preliminary weight differs from a predetermined threshold.

The neural network may be trained further based on third loss information indicating how small negative values of the first preliminary weight and the second preliminary weight are.

The pooling processes may include an average pooling process or a median pooling process.

The first feature map may be obtained through convolution processing on the first frame based on a first filter kernel, and the plurality of second feature maps may be obtained through convolution processing on the second frame based on a plurality of second filter kernels.

A distance between the samples of the first frame on which a convolution operation with the first filter kernel is performed, and a distance between samples of the second frame on which a convolution operation with the plurality of second filter kernels is performed, may be greater than 1.

In the first filter kernel, a sample corresponding to the current sample of the first frame may have a preset first value, and other samples may have a value of 0.

In the plurality of second filter kernels, any one sample has a preset second value, and other samples may have a value of 0, and positions of samples having the second value in the plurality of second filter kernels may be different from each other.

The sign of the preset first value and the sign of the preset second value may be opposite to each other.

An image processing method according to an embodiment includes: obtaining a plurality of difference maps between a first frame or a first feature map corresponding to the first frame, and a plurality of second feature maps corresponding to a second frame; obtaining a plurality of third feature maps and a plurality of fourth feature maps by performing pooling processes on the plurality of difference maps according to a first size and a second size; obtaining a plurality of modified difference maps by weighted-summing the plurality of third feature maps and the plurality of fourth feature maps; identifying any one collocated sample by considering sizes of sample values of collocated samples of the plurality of modified difference maps corresponding to a current sample of the first frame; and determining a filter kernel used to obtain the second feature map corresponding to the modified difference map including the identified collocated sample, as a motion vector of the current sample.

Mode for Invention

As the present disclosure allows for various changes and numerous embodiments, particular embodiments will be illustrated in the drawings and described in detail. However, this is not intended to limit the present disclosure to particular modes of practice, and it is to be appreciated that all changes, equivalents, and substitutes that do not depart from the spirit and technical scope of the present disclosure are encompassed in the present disclosure.

In describing embodiments, detailed descriptions of the related art will be omitted when it is deemed that they may unnecessarily obscure the gist of the present disclosure. In addition, ordinal numerals (e.g., 'first', 'second', and the like) used in the description of an embodiment are identifier codes for distinguishing one component from another.

As used herein, the expression "at least one of a, b, or c" may indicate only a, only b, only c, both a and b, both a and c, both b and c, all of a, b, and c, or variations thereof.

Also, in the present disclosure, it should be understood that when components are "connected" or "coupled" to each other, the components may be directly connected or coupled to each other, but may alternatively be connected or coupled to each other with a component therebetween, unless specified otherwise.

As used herein, a component expressed as, for example, '...er (or)', '... unit', '... module', or the like, may denote a unit in which two or more components are combined into one component or one component is divided into two or more components according to its function. In addition, each component to be described below may additionally perform, in addition to its primary function, some or all of functions of other components take charge of, and some functions among primary functions of the respective components may be exclusively performed by other components.

In the present disclosure, a 'frame' may be a still image. For example, a 'frame' may include still images that constitute a moving image (or a video).

In the present disclosure, a 'sample' refers to data that is assigned to a sampling position of a frame or a feature map and is to be processed. For example, a sample may be a pixel value in a frame in a spatial domain. A unit including at least one sample may be defined as a block.

In the present disclosure, a 'current sample' refers to a particular sample included in a current frame (or a first frame) to be processed, or a sample to be processed from among samples included in a current frame (or a first frame). A 'collocated sample' refers to a sample located at the same location as a current sample from among samples included in a frame (e.g., a previous frame, a next frame, an output frame, a feature map or a second frame) other than a current frame (or a first frame).

In the present disclosure, a 'neural network' refers to an example of an artificial intelligence model simulating neurons of brain, and is not limited to a neural network model using a particular algorithm.

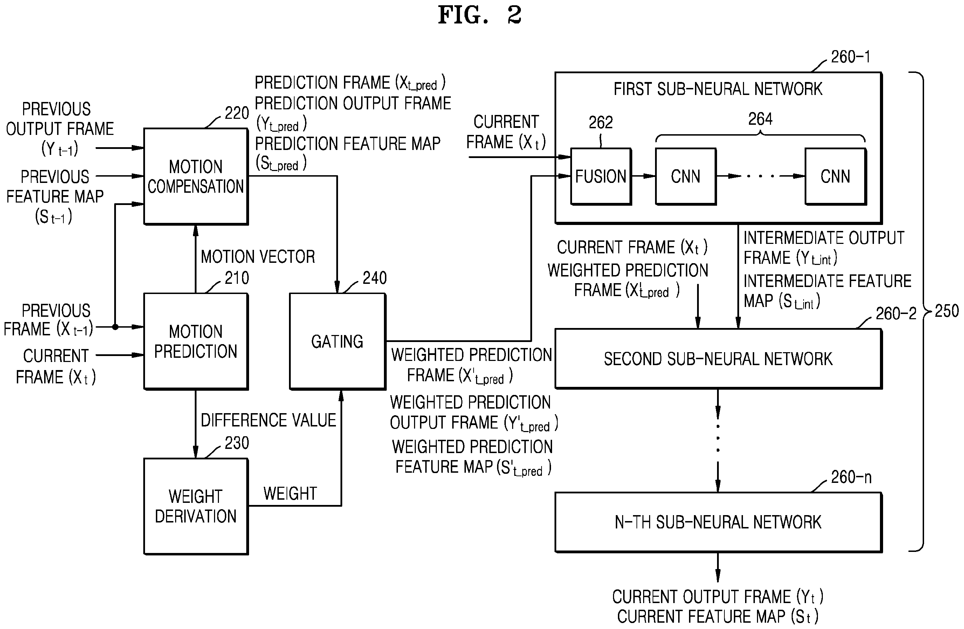

In the present disclosure, a 'weighting value' refers to a value used in a calculation process of each layer of a neural network, and may be used to, for example, apply an input value to a certain formula. In general, a 'weighting value' is also referred to as a 'weight', however, in the disclosure, in order to distinguish a 'weighting value' from a 'weight' that is derived in a weight derivation process (see a weight derivation process 230 of FIG. 2) to be described below, a weight used in a calculation process of a neural network will be referred to as a weighting value. A weighting value is a value set as a result of training, and may be refined by using separate training data when necessary.

Hereinafter, embodiments according to the technical spirit of the present disclosure will be described in detail.

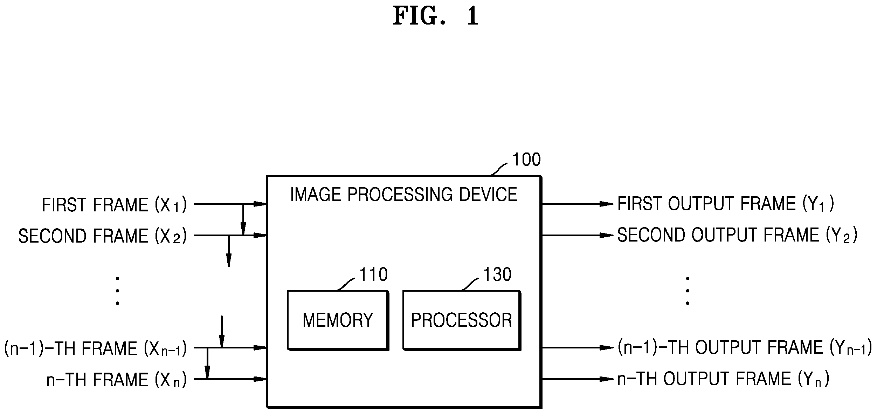

FIG. 1 is a diagram illustrating a configuration of an image processing device 100 according to an embodiment.

The image processing device 100 includes a memory 110 and a processor 130.

The image processing device 100 may be implemented as a device with an image processing function, such as a server, a television (TV), a camera, a mobile phone, a tablet personal computer (PC), or a notebook computer.

Although the memory 110 and the processor 130 are illustrated separately from each other in FIG. 1, in an embodiment, the memory 110 and the processor 130 may be implemented through one or more hardware modules.

The processor 130 may be implemented as a dedicated processor for neural network-based image processing. Alternatively, the processor 130 may be implemented through a combination of software and a general-purpose processor such as an application processor (AP), a central processing unit (CPU), or a graphics processing unit (GPU). The dedicated processor may include a memory for implementing an embodiment of the present disclosure, or a memory processing unit for using an external memory.

The processor 130 may include a plurality of processors. In this case, the processor 130 may be implemented through a combination of dedicated processors or a combination of software and a plurality of general-purpose processors, such as APs, CPUs or GPUs.

The processor 130 may include at least one arithmetic logic unit (ALU) for a convolution operation to be described below. For a convolution operation, the ALU may include a multiplier configured to perform a multiplication operation between sample values, and an adder configured to sum up result values of the multiplication operation.

The memory 110 may store one or more instructions for processing consecutive frames. In an embodiment, the memory 110 may store a neural network used to generate an output frame. In a case where the neural network is implemented as a dedicated hardware chip for artificial intelligence or as part of an existing general-purpose processor (e.g., a CPU or an AP) or a dedicated graphics processor (e.g., a GPU), the neural network may be not stored in the memory 110.

The processor 130 obtains consecutive output frames by sequentially processing consecutive frames according to the instructions stored in the memory 110. Here, the term 'consecutive frames' may typically refer to frames constituting a moving image. However, in the present disclosure, consecutive frames do not necessarily constitute one moving image. In other words, individually captured still images may be processed by the image processing device 100 according to a predetermined order, a random order, or an order set by a user.

As illustrated in FIG. 1, the image processing device 100 may obtain a first output frame $Y_1$ to an n-th output frame $Y_n$ by sequentially processing a first frame $X_1$ to an n-th frame $X_n$. In FIG. 1, t in the expression $X_t$ may denote the position of the frame in an order in which the frames are processed by the image processing device 100.

The image processing device 100 may obtain the first output frame $Y_1$ to the n-th output frame $Y_n$ through a pre-trained neural network. The neural network may be pre-trained for frame resolution enhancement, noise removal, dynamic range expansion, or image quality improvement.

For example, in a case where the neural network is pre-trained to increase the resolution of a frame, the image processing device 100 may process the first frame $X_1$ to the n-th frame $X_n$ based on the neural network to obtain the first output frame $Y_1$ to the n-th output frame $Y_n$ having a resolution higher than a resolution of the first frame $X_1$ to the n-th frame $X_n$.

There may be various methods of training the neural network to increase a resolution of a frame. For example, the neural network may be trained by calculating loss information by comparing an output frame for training obtained by the neural network as a result of processing a frame for training, with a ground-truth frame whose resolution has been increased, and minimizing the calculated loss information. As a result of training the neural network, weighting values used in layers in the neural network may be refined.

As another example, in a case where the neural network is trained to remove noise of a frame, the image processing device 100 may process the first frame $X_1$ to the n-th frame $X_n$ based on the neural network to obtain the first output frame $Y_1$ to the n-th output frame $Y_n$ having a smaller amount of noise than the first frame $X_1$ to the n-th frame $X_n$.

There may be various methods of training the neural network to remove noise of a frame. For example, the neural network may be trained by calculating loss information by comparing an output frame for training obtained by the neural network as a result of processing a frame for training, with a ground-truth frame from which noise has been removed, and minimizing the calculated loss information.

The neural network may be trained through supervised learning, unsupervised learning, or reinforcement learning.

According to an embodiment, when a current frame that is a current processing target from among consecutive frames is processed, a previous frame may also be used. As illustrated in FIG. 1, when a second frame $X_2$ is to be processed, the first frame $X_1$ may also be input to the image processing device 100. As will be described below, the first output frame $Y_1$ obtained as a result of processing the first frame $X_1$, and a feature map obtained during the processing of the first frame $X_1$ may also be input to the image processing device along with the second frame $X_2$.

The reason for inputting a previous frame to the image processing device 100 when processing a current frame is to consider a temporal correlation between consecutive frames. By reflecting information of the previous frame, for example, sample values of the previous frame, in the processing of the current frame, better results may be expected than when processing only the current frame based on the neural network.

However, when the previous frame is used as it is, an error may occur in a position of an object included in a current output frame. This is because positions of an object commonly included in the previous frame and the current frame captured at different time points may be different from each other. In other words, when the common object is located at different points in the current frame and the previous frame, the position of the object included in the previous frame may be reflected in the processing of the current frame, and thus, the position of the object included in the current output frame may be different from that in the current frame.

In addition, due to a motion of an object, the object existing in the previous frame may be occluded in the current frame. That the object is occluded means that the whole or part of the object existing in the previous frame is not included in the current frame. For example, the object included in the previous frame may be hidden by another object in the current frame or may not be captured by a camera capturing the current frame. The object existing in the previous frame but occluded in the current frame may be not helpful in processing the current frame.

Accordingly, although the image processing device 100 according to an embodiment also uses the previous frame during the processing of the current frame in order to consider a temporal correlation between the current frame and the previous frame, the image processing device 100 may not use the previous frame as it is, but instead, uses a prediction frame generated from the previous frame to process the current frame.

In addition, the image processing device 100 may determine to what extent samples of the prediction frame are to be used in processing of the current frame, and may accordingly gate the prediction frame. Gating will be described below.

Although not illustrated in FIG. 1, the image processing device 100 may further include a display or may be connected to a separate display device. At least one of consecutive output frames generated by the image processing device 100 may be reproduced on the display or display device. When necessary, at least one of the output frames may be postprocessed and then reproduced on the display or display device.

In an embodiment, the image processing device 100 may encode at least one of the output frames through an image compression method using frequency conversion. The image compression method using frequency conversion may include predicting an output frame to generate prediction data, generating residual data corresponding to a difference between the output frame and the prediction data, transforming the residual data that is a spatial domain component into a frequency domain component, quantizing the residual data transformed into the frequency domain component, and entropy-encoding the quantized residual data. The image compression method may be implemented through at least one of image processing methods using frequency conversion such as MPEG-2, H.264 advanced video coding (AVC), MPEG-4, high efficiency video coding (HEVC), VC-1, VP8, VP9, and AOMedia Video 1 (AV1).

Encoded data or a bitstream generated by encoding the output frame may be transmitted to an external device through a network, or may be stored in a data storage medium such as a magnetic medium (e.g., a hard disk, a floppy disk, or a magnetic tape), an optical recording medium (e.g., a compact disc read-only memory (CD-ROM) or a digital versatile disk (DVD)), or a magneto-optical medium (e.g., a floptical disk).

Hereinafter, processing of a current frame Xt by the image processing device 100 will be described in detail with reference to FIG. 2.

The image processing device 100 obtains data to be input to a neural network 250, through a motion prediction process 210, a motion compensation process 220, the weight derivation process 230, and a gating process 240.

First, the motion prediction process 210 is a process of determining a motion vector between samples of the current frame Xt and samples of a previous frame $X_{t-1}$. A motion vector indicates a relative positional relationship between the same or similar samples existing in the previous frame $X_{t-1}$ and the current frame Xt. For example, when a particular sample is located at coordinates (a, b) in the previous frame $X_{t-1}$ and is located at coordinates (c, d) in the current frame Xt, a motion vector of the particular sample may be expressed as (c-a, d-b).

As will be described below, in an embodiment of the present disclosure, a motion vector may be expressed as a filter kernel for a convolution operation.

The image processing device 100 may identify, in the previous frame $X_{t-1}$, prediction samples corresponding to the samples of the current frame Xt through the motion prediction process 210.

In an embodiment, the image processing device 100 may perform a search to determine samples of the previous frame $X_{t-1}$ that are respectively similar to the samples of the current frame Xt, and identify the determined samples of the previous frame $X_{t-1}$ as prediction samples of the samples in the current frame Xt. For example, when a current sample of the current frame Xt is most similar to a sample at the right of a sample at the same position (i.e., a collocated sample) as the current sample from among the samples of the previous frame $X_{t-1}$, the image processing device 100 may identify the sample at the right of the collocated sample as a prediction sample of the current sample.

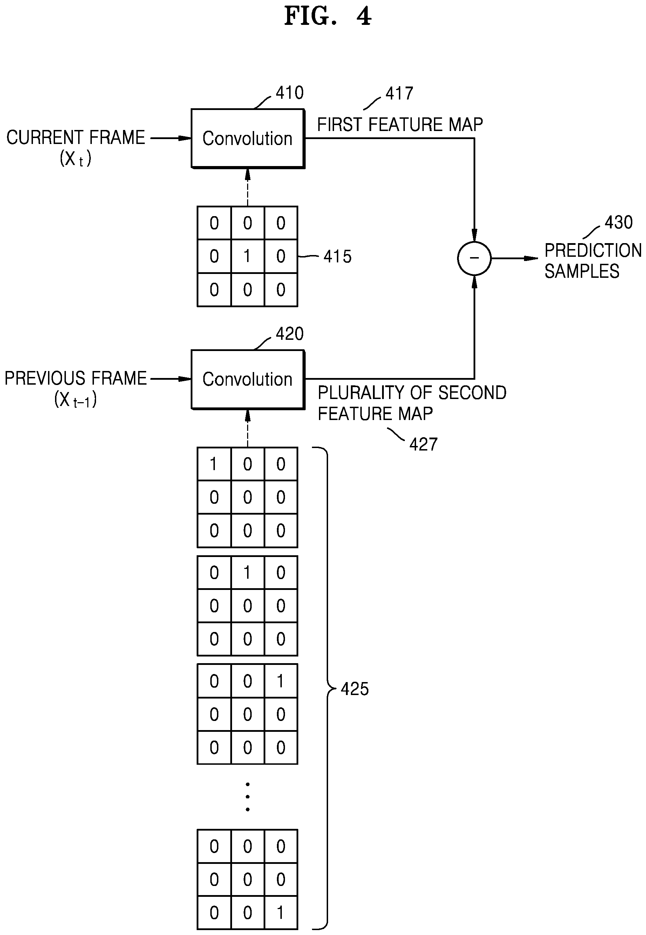

In an embodiment, the image processing device 100 may perform the motion prediction process 210 through a convolution operation, and thus will be described below with reference to FIGS. 4 to 7.

The image processing device 100 uses a relative positional relationship between the samples of the current frame Xt and the prediction samples in the previous frame $X_{t-1}$ corresponding to the samples of the current frame Xt, as a motion vector in the motion compensation process 220.

The motion compensation process 220 is a process of obtaining a prediction frame $X_{t\_pred}$, which is a prediction version of the current frame Xt, by changing sample values of samples of the previous frame $X_{t-1}$.

The image processing device 100 may obtain the prediction frame $X_{t\_pred}$ by changing the sample values of the previous frame $X_{t-1}$ according to sample values of the prediction samples.

In an embodiment, sample values of collocated samples of the previous frame $X_{t-1}$ at the same positions as the samples of the current frame Xt may be changed according to the sample values of the prediction samples. For example, when a prediction sample of a current sample located at the upper left of the current frame Xt is located at the right of a collocated sample of the previous frame $X_{t-1}$, a sample value of the collocated sample of the previous frame $X_{t-1}$ may be changed according to a sample value located at the right (i.e., a sample value of the prediction sample).

The weight derivation process 230 may be understood as a process of determining to what extent samples of the prediction frame $X_{t\_pred}$ are helpful in processing the current frame Xt or a degree of contribution of samples in the prediction frame $X_{t\_pred}$ in processing the current frame Xt.

Through the weight derivation process 230, weights to be applied to the samples of the prediction frame $X_{t\_pred}$ may be derived. In processing the current frame Xt, a high weight may be derived for a sample having a high degree of contribution, and a low weight may be derived for a sample having a low degree of contribution.

A weight may be based on a difference value between the sample values of the samples of the current frame Xt and the sample values of the prediction samples corresponding to the sample values of the samples of the current frame Xt. As the difference value increases, the weight may decrease, and as the difference value decreases, the weight may increase. That the difference value is large may mean that the sample value of the prediction sample does not have a high degree of contribution in processing the sample of the current frame Xt, and thus, the calculated weight may be small.

The gating process 240 is a process of applying weights to the samples of the prediction frame $X_{t\_pred}$. The sample values of the prediction frame $X_{t\_pred}$ may be changed according to the degrees of contribution of the samples of the prediction frame Xt_pred.

In an embodiment, in the gating process 240, the sample values of the samples of the prediction frame $X_{t\_pred}$ may be multiplied by the weights, respectively. A sample value of a sample multiplied by a weight of 1 is not changed, whereas a sample value of a sample multiplied by a weight less than 1 becomes smaller.

As described above with reference to FIG. 1, when processing the current frame Xt, the image processing device 100 may further use a previous output frame $Y_{t-1}$ corresponding to the previous frame $X_{t-1}$, and a previous feature map $S_{t-1}$ obtained during processing of the previous frame $X_{t-1}$.

The previous output frame $Y_{t-1}$ and the previous feature map $S_{t-1}$ may be output by the neural network 250 processing the previous frame $X_{t-1}$. The previous output frame $Y_{t-1}$ may be output from the last layer of the neural network 250, and the previous feature map $S_{t-1}$ may be output from a previous layer of the last layer of the neural network 250. Here, the previous layer of the last layer may refer to a previous layer directly connected to the last layer, or a previous layer before one or more layers previous to the last layer.

Because the previous output frame $Y_{t-1}$ and the previous feature map $S_{t-1}$ may also have characteristics of the previous frame $X_{t-1}$, application of the motion compensation process 220 and the gating process 240 may be necessary. In an embodiment, through the motion compensation process 220, a prediction output frame $Y_{t\_pred}$ that is a prediction version of a current output frame Yt, and a prediction feature map $S_{t\_pred}$ that is a prediction version of a current feature map St may be obtained from the previous output frame $Y_{t-1}$ and the previous feature map $S_{t-1}$.

The motion compensation process 220 for the previous output frame $Y_{t-1}$ and the previous feature map $S_{t-1}$ may be the same as the motion compensation process 220 for the previous frame $X_{t-1}$ described above. In an embodiment, the prediction output frame $Y_{t\_pred}$ and the prediction feature map $S_{t\_pred}$ may be generated by changing a sample value of a collocated sample of the previous output frame $Y_{t-1}$ and the previous feature map $S_{t-1}$ according to a positional relationship (i.e., a motion vector) between a current sample of the current frame Xt and a prediction sample in the previous frame $X_{t-1}$. For example, when a prediction sample of the current sample of the current frame Xt is located at the right of a collocated sample of the previous frame $X_{t-1}$, the sample value of the collocated sample of the previous output frame $Y_{t-1}$ and the previous feature map $S_{t-1}$ may be changed according to a sample value located at the right.

As weights obtained through the weight derivation process 230 are applied to samples of the prediction output frame $Y_{t\_pred}$ and the prediction feature map $S_{t\_pred}$ in the gating process 240, a weighted prediction output frame $Y'_{t\_pred}$ and a weighted prediction feature map $S'_{t\_pred}$ may be obtained.

FIG. 2 illustrates that both the previous output frame $Y_{t-1}$ and the previous feature map $S_{t-1}$ are used in processing of the current frame Xt, but this is only an example, and the previous output frame $Y_{t-1}$ and the previous feature map $S_{t-1}$ may not be used in processing of the current frame Xt. In an embodiment, only the previous frame $X_{t-1}$ may be considered when processing the current frame Xt. In another embodiment, only one of the previous output frame $Y_{t-1}$ and the previous feature map $S_{t-1}$ may be used in processing of the current frame Xt.

A weighted prediction frame $X'_{t\_pred}$, the weighted prediction output frame $Y'_{t\_pred}$, the weighted prediction feature map $S'_{t\_pred}$, which are derived through the gating process 240, and the current frame Xt are input to the neural network 250. As a result of processing by the neural network 250, the current output frame Yt corresponding to the current frame Xt is obtained.

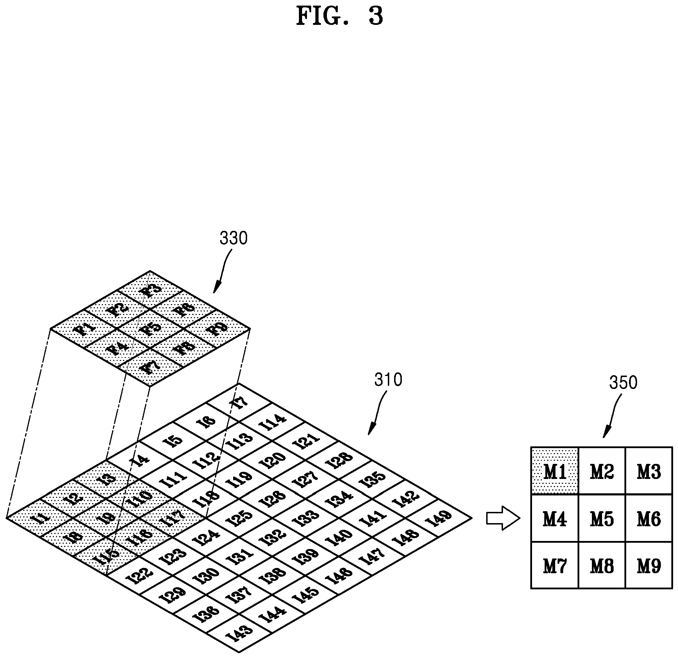

The neural network 250 according to an embodiment may include a convolutional layer. In the convolutional layer, a convolution process is performed on an input data by using a filter kernel. The convolution process in the convolutional layer will be described below with reference to FIG. 3.

The neural network 250 may include one or more sub-neural networks 260-1, ..., 260-n. FIG. 2 illustrates that several sub-neural networks 260-1, ..., 260-n are included in the neural network 250, but this is only an example, and only one sub-neural network 260-1 may be included in the neural network 250. That one sub-neural network 260-1 is included in the neural network 250 may mean that the neural network 250 includes a fusion layer 262 and a plurality of convolutional layers.

The fusion layer 262 may fuse the current frame Xt with data output from the gating process 240, that is, the weighted prediction frame $X'_{t\_pred}$, the weighted prediction output frame $Y'_{t\_pred}$, and the weighted prediction feature map $S'_{t\_pred}$. Different types of data may be combined with each other through the fusion process.

A result of combining the current frame Xt with the weighted prediction frame $X'_{t\_pred}$, the weighted prediction output frame $Y'_{t\_pred}$, and the weighted prediction feature map $S'_{t\_pred}$ is convolution-processed by subsequent convolutional layers 264.

As a result of processing by a first sub-neural network 260-1, an intermediate output frame $Y_{t\_int}$ and an intermediate feature map $S_{t\_int}$ may be obtained.

The intermediate output frame $Y_{t\_int}$ may be output by the last layer included in the first sub-neural network 260-1, and the intermediate feature map $S_{t\_int}$ may be output by a previous layer of the last layer included in the first sub-neural network 260-1.

The current frame Xt and the weighted prediction frame $X'_{t\_pred}$, and the intermediate output frame $Y_{t\_int}$ and intermediate feature map $S_{t\_int}$ that are output from the first sub-neural network 260-1 may be input to a second sub-neural network 260-2. As in the first sub-neural network 260-1, in the fusion layer 262 of the second sub-neural network 260-2, the current frame Xt, the weighted prediction frame $X'_{t\_pred}$, the intermediate output frame $Y_{t\_int}$, and the intermediate feature map $S_{t\_int}$ may combined with each other and then convolution-processed.

The intermediate output frame $Y_{t\_int}$ and the intermediate feature map $S_{t\_int}$ may be output as a result of processing by the second sub-neural network 260-2, and then input to a third sub-neural network 260-3. As in the second sub-neural network 260-2, the current frame Xt and the weighted prediction frame $X'_{t\_pred}$ may be further input to the third sub-neural network 260-3. As a result of processing by a last sub-neural network 260-n, the current output frame Yt corresponding to the current frame Xt may be obtained.

The current output frame Yt output from the last sub-neural network 260-n, the current frame Xt, and the current feature map St may be used in processing of a next frame $X_{t+1}$.

Meanwhile, when the current frame Xt is the first frame of consecutive frames, the previous frame $X_{t-1}$, the previous output frame $Y_{t-1}$, and the previous feature map $S_{t-1}$ may be set to each have a predetermined sample value (e.g., 0).

Hereinafter, the convolution operation will be described, and then, the motion prediction process 210 and the motion compensation process 220 will be described in detail.

FIG. 3 is a diagram for describing a convolution operation.

A feature map 350 may be generated through a multiplication operation and an addition operation between weighting values of a filter kernel 330 used in a convolutional layer and sample values in a frame 310 corresponding to the weighting values, respectively. The filter kernel 330 has a predetermined size (3x3 in FIG. 3).

The number of feature maps 350 varies depending on the number of filter kernels 330. The number of filter kernels 330 and the number of feature maps 350 may be equal to each other. That is, when one filter kernel 330 is used in the convolutional layer, one feature map 350 may be generated, and when two filter kernels 330 are used, two feature maps 350 may be generated.

In FIG. 3, I1 to I49 displayed in the frame 310 indicate samples of the frame 310, and F1 to F9 in the filter kernel 330 indicate weighting values of the filter kernel 330. In addition, M1 to M9 in the feature map 350 indicate samples of the feature map 350.

FIG. 3 illustrates that the frame 310 includes 49 samples, but this is only an example, and when the frame 310 has a resolution of 4K, the frame 310 may include, for example, 3840 X 2160 samples.

In a convolution operation, a multiplication operation may be performed between sample values of the samples 11, I2, I3, I8, I9, I10, I15, I16, and I17 of the frame 310 and the weight values F1, F2, F3, F4, F5, F6, F7, F8, and F9 of the filter kernel 330, respectively, and a value obtained by combining (e.g., adding) result values of the multiplication operation may be allocated as a value of the sample M1 of the feature map 350.

When a stride of a convolution operation is 2, a multiplication operation may be performed between sample values of the samples I3, I4, I5, I10, I11, I12, I17, I18, and I19 of the frame 310, and the weight values F1, F2, F3, F4, F5, F6, F7, F8, and F9 of the filter kernel 330, respectively, and a value obtained by combining result values of the multiplication operation may be allocated as a value of the sample M2 of the feature map 350.

As a convolution operation is performed between sample values in the frame 310 and weight values of the filter kernel 330 while shifting the filter kernel 330 according to the stride to reach the last sample of the frame 310, the feature map 350 having a certain size may be obtained.

FIG. 4 is a diagram for describing the motion prediction process 210 illustrated in FIG. 2.

In an embodiment, the image processing device 100 may perform motion prediction based on convolution operations 410 and 420 on the current frame Xt and the previous frame $X_{t-1}$.

The image processing device 100 may obtain a first feature map 417 by performing the convolution operation 410 on the current frame Xt with a predetermined first filter kernel 415, and obtain a plurality of second feature maps 427 by performing the convolution operation 420 on the previous frame $X_{t-1}$ with a plurality of predetermined second filter kernels 425.

The convolution operation 410 based on the first filter kernel 415 may be sequentially performed on samples of the current frame Xt, and the convolution operation 420 based on the plurality of second filter kernels 425 may be sequentially performed on samples of the previous frame $X_{t-1}$.

As the convolution operation 410 based on the first filter kernel 415 is performed on a current sample of the current frame Xt and samples around the current sample, a sample value of a collocated sample of the first feature map 417 may be obtained. In addition, as the convolution operation 420 based on the plurality of second filter kernels 425 is performed on a collocated sample of the previous frame $X_{t-1}$ and samples around the collocated sample, sample values of collocated samples of the plurality of second feature maps 427 may be obtained.

The first filter kernel 415 and the plurality of second filter kernels 425 may each have a certain size. For example, the first filter kernel 415 and the plurality of second filter kernels 425 may have a size of 3x3 as illustrated in FIG. 4, but are not limited thereto. In an embodiment, the first filter kernel 415 and the plurality of second filter kernels 425 may each have a size such as 4x4 or 5x5.

As a result of the convolution operation 410 on the current frame Xt based on the first filter kernel 415, the first feature map 417 having the same size as the current frame Xt may be obtained. The current frame Xt may be padded in order to obtain the first feature map 417 having the same size as the current frame Xt through the convolution operation 410. Padding refers to a process of allocating a sample having a predetermined sample value (e.g., 0) outside at least one of a left boundary, an upper boundary, a right boundary, or a lower boundary of the current frame Xt. The number of samples of the current frame Xt increases through the padding.

In the first filter kernel 415, a sample corresponding to a current sample may have a preset first value, and the other samples may have a value of 0. FIG. 4 illustrates that the first filter kernel 415 has a value of 1 and a value of 0, but 1 is an example of the preset first value.

The first filter kernel 415 is applied to a current sample of the current frame Xt and samples around the current sample, wherein the sample corresponding to the current sample may refer to a sample applied to a multiplication operation with the current sample from among the samples of the first filter kernel 415. FIG. 4 illustrates that the center sample of the first filter kernel 415 has a weighting value of 1, which considers a case where the current frame Xt is padded in the left direction from the left boundary and in the upward direction from the upper boundary.

For example, when the convolution operation 410 is performed on the uppermost-leftmost sample of the current frame Xt, a multiplication operation may be performed between the uppermost-leftmost sample and the center sample of the first filter kernel 415 only when the current frame Xt is padded in the left and upward directions. Thus, when the current frame Xt is not padded in the left and upward directions, the uppermost-leftmost sample of the first filter kernel 415 has a value of 1.

As the sample of the first filter kernel 415 corresponding to the current sample has the preset first value, samples of the first feature map 417 may be calculated by multiplying sample values of samples of the current frame Xt by the first value. Accordingly, when the first value is 1, the sample values of the first feature map 417 are equal to the sample values of the current frame Xt, respectively.

In an embodiment, the convolution operation 410 on the current frame Xt may be omitted in the motion prediction process. This is because, when the sample of the first filter kernel 415 corresponding to the current sample has a value of 1 and the other samples have a value of 0, the first feature map 417 obtained as a result of the convolution operation 410 is the same as the current frame Xt. Accordingly, prediction samples 430 may be identified by comparing the current frame Xt with the second feature maps 427 obtained as a result of the convolution operation 420 on the previous frame $X_{t-1}$.

The plurality of second filter kernels 425 used in the convolution operation 420 on the previous frame $X_{t-1}$ may have a value of 0 and a preset second value. The preset second value may be equal to the preset first value. For example, both the first value and the second value may be 1. When the first value and the second value are equal to each other, the first filter kernel 415 may correspond to any one of the plurality of second filter kernels 425.

In an embodiment, the sign of the preset first value may be opposite to the sign of the preset second value. For example, when the first value is 1, the second value may be -1.

Any one of samples of the plurality of second filter kernels 425 may have the preset second value, and the other samples may have a value of 0. The positions of samples having the second value in the plurality of second filter kernels 425 may be different from each other. As illustrated in FIG. 4, in any one of the second filter kernels 425, the upper-left sample has the second value, and in another second filter kernel 425, the upper-middle sample may have the second value.

The number of second filter kernels 425 may vary depending on the size of the second filter kernels 425. When the size of the second filter kernels 425 is 3x3, the number of second filter kernels 425 may be 9. This is because the positions of samples having the second value in the respective second filter kernels 425 are different from each other.

The second feature maps 427 are obtained through the convolution operation 420 on the previous frame $X_{t-1}$ using the second filter kernels 425. The number of second feature maps 427 may be equal to the number of second filter kernels 425.

The second filter kernels 425 may be used to extract a sample value of any one of a collocated sample of the previous frame $X_{t-1}$ and samples around the collocated sample. For example, the second filter kernel in which the upper-left sample has the second value may be used to extract a sample value of a sample at the upper left of a collocated sample of the previous frame $X_{t-1}$, and the second filter kernel in which the upper-right sample has the second value may be used to extract a sample value of a sample at the upper right of a collocated sample of the previous frame $X_{t-1}$.

The image processing device 100 may identify the prediction samples 430 of samples in the current frame Xt by comparing sample values of the first feature map 417 with sample values of the second feature maps 427. The image processing device 100 may identify a sample that is most similar to a sample value of a certain position of the first feature map 417, from among sample values of certain positions of the second feature maps 427, and identify a sample in the previous frame $X_{t-1}$ corresponding to the identified sample, as the prediction sample 430 of a current sample of a certain position.

For example, when a current sample is a center sample in the current frame Xt, a sample value that is most similar to a sample value of a center sample of the first feature map 417 is identified from among sample values of center samples of the second feature maps 427. Then, a sample in the previous frame $X_{t-1}$ corresponding to the identified sample value may be identified as the prediction sample 430 of the current sample. When a sample value of a center sample of the second feature map 427, which is generated based on the second filter kernel 425 in which the upper-right sample has the second value, is most similar to a sample value of a center sample of the first feature map 417, a sample located at the upper right of a center sample of the previous frame $X_{t-1}$ may be determined as the prediction sample 430 of the current sample.

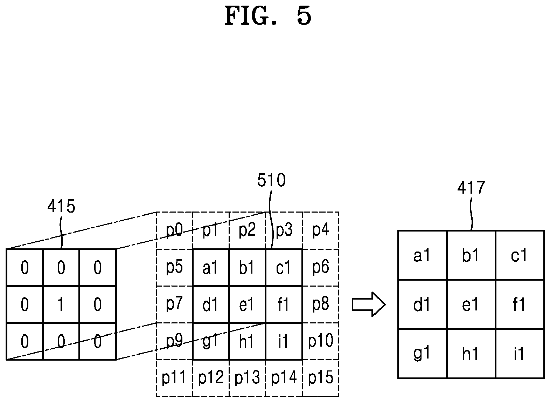

Hereinafter, an example of the motion prediction process will be described with reference to FIGS. 5 to 7.

FIG. 5 is an example diagram illustrating a convolution operation applied to a current frame 510 for motion prediction.

In the first filter kernel 415, the center sample corresponding to a current sample has a value of 1, and the other samples have a value of 0.

The current frame 510 may have samples a1, b1, c1, d1, e1, f1, g1, h1, and i1. FIG. 5 illustrates that the size of the current frame 510 is 3x3, but this is for convenience of description, and the size of the current frame 510 may vary.

In order to generate the first feature map 417 having the same size as the current frame 510, the current frame 510 may be padded in the left, upward, right, and downward directions. Through padding, samples p0 to p15 having predetermined sample values may be added to surround the current frame 510.

In order to sequentially perform a convolution operation on samples of the current frame 510, the stride of the convolution operation may be set to 1.

First, a sample value of a first sample (i.e., the upper-left sample) of the first feature map 417 is derived through a convolution operation between weighting values of the first filter kernel 415 and sample p0, sample p1, sample p2, sample p5, sample a1, sample b1, sample p7, sample d1, and sample e1 of the current frame 510. Because the center sample of the first filter kernel 415 has a value of 1 and the other samples have a value of 0, the sample value of the upper-left sample of the first feature map 417 is derived to be a1.

Next, a sample value of a second sample (i.e., the sample located at the right of the upper-left sample) of the first feature map 417 is derived through a convolution operation between the weighting values of the first filter kernel 415 and sample p1, sample p2, sample p3, sample a1, sample b1, sample c1, sample d1, sample e1, and sample f1 of the current frame 510. Through the convolution operation, the sample value of the second sample of the first feature map 417 is derived to be b1.

A convolution operation based on the samples of the current frame 510 and the first filter kernel 415 is performed until the first filter kernel 415 reaches the last sample of the current frame 510, that is, sample i1. When the first filter kernel 415 reaches sample i1, a sample value of the last sample of the first feature map 417 is derived to be i1 through a convolution operation between the weighting values of the first filter kernel 415 and sample e1, sample f1, sample p8, sample h1, sample i1, sample p10, sample p13, sample p14, and sample p15 of the current frame 510.

Referring to FIG. 5, it may be seen that, when the center sample of the first filter kernel 415 has a value of 1, sample values of the current frame 510 and sample values of the first feature map 417 are equal to each other. That is, the first filter kernel 415 in which the sample corresponding to a current sample has a value of 1 is used to extract sample values of the current frame 510.

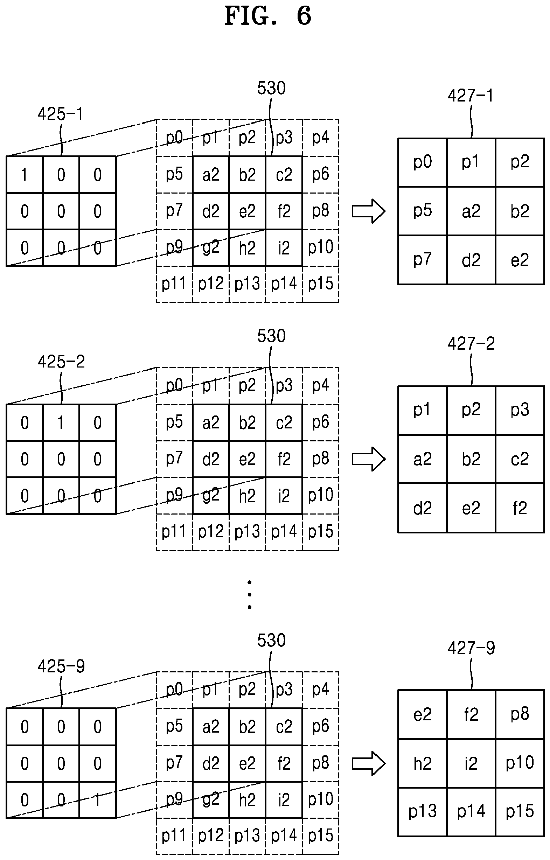

FIG. 6 is an example diagram illustrating a convolution operation applied to a previous frame for motion prediction.

The second filter kernels 425 may include one sample having a value of 1, and other samples having a value of 0. As described above, the positions of samples having a weighting value of 1 in the second filter kernels 425 may be different from each other. The second filter kernels 425 may each include one sample having a value of -1 and other samples having a value of 0.

A previous frame 530 may include samples a2, b2, c2, d2, e2, f2, g2, h2, and i2. FIG. 6 illustrates that the size of the previous frame 530 is 3x3, but this is only for convenience of description, and the size of the previous frame 530 may vary.

In order to generate the second feature maps 427 having the same size as the previous frame 530, the previous frame 530 may be padded in the left, upward, right, and downward directions. Through padding, samples having predetermined sample values may be added to surround the previous frame 530.

The second feature maps 427 corresponding to the second filter kernels 425 may be obtained through a convolution operation using the previous frame 530 and each of the second filter kernels 425.

Hereinafter, in order to distinguish between the second filter kernels 425, the second filter kernels 425 are referred to as a second filter kernel A 425-1, a second filter kernel B 425-2, ..., a second filter kernel I 425-9 according to the position of a sample having a value of 1, and in order to distinguish between the second feature maps 427, the second feature maps 427 are referred to as a second feature map A 427-1, a second feature map B 427-2, ..., a second feature map I 427-9.

In order to sequentially perform a convolution operation on samples of the previous frame 530, the stride of the convolution operation may be set to 1.

First, the second feature map A 427-1 may be obtained through a convolution operation based on the second filter kernel A 425-1 in which the upper-left sample has a value of 1, and the previous frame 530. As described above, the second filter kernel A 425-1 may be convolution-processed with the previous frame 530 while shifting according to a stride of 1. The second filter kernel A 425-1 is used to extract sample values at the upper left of the samples (samples a2, b2, c2, d2, e2, f2, g2, h2, and i2) of the previous frame 530. Accordingly, the second feature map A 427-1 has values obtained by multiplying sample values of samples located at the upper left of the samples (samples a2, b2, c2, d2, e2, f2, g2, h2, and i2) of the previous frame 530 by 1. For example, when a current sample is a1, a collocated sample of the previous frame 530 is a2, and a sample value of a collocated sample of the second feature map A 427-1 is derived to be a sample value of p0 located at the upper left of sample a2.

Next, the second feature map B 427-2 may be obtained through a convolution operation between the previous frame 530 and the second filter kernel B 425-2 in which the sample located at the right of the upper-left sample has a value of 1. The second filter kernel B 425-2 is used to extract sample values located above the samples (samples a2, b2, c2, d2, e2, f2, g2, h2, and i2) of the previous frame 530. Accordingly, the second feature map B 427-2 has values obtained by multiplying sample values of samples located above the samples (samples a2, b2, c2, d2, e2, f2, g2, h2, and i2) of the previous frame 530 by 1. For example, when a current sample is a1, a collocated sample of the previous frame 530 is a2, and a sample value of a collocated sample of the second feature map B 427-2 is derived to be a sample value of p1 located above a2.

In this manner, the second feature map A 427-1 to the second feature map I 427-9 may be obtained through a convolution operation between the previous frame 530 and each of the second filter kernel A 425-1 to the second filter kernel I 425-9.

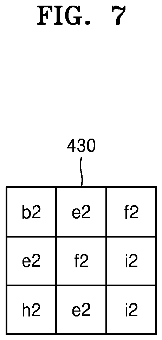

FIG. 7 is an example diagram illustrating the prediction samples 430 corresponding to samples in a current frame.

The image processing device 100 may identify which samples of the second feature maps 427 are most similar to samples in the first feature map 417. At this time, the samples of the first feature map 417, and samples at the same positions as the respective samples of the first feature map 417 among the samples of the second feature maps 427 are compared with each other. In an embodiment, the image processing device 100 may calculate an absolute value of a difference between a sample value of a sample at a particular position in the first feature map 417 and each of sample values of samples of the particular position in the second feature maps 427, and identify a sample value having a smallest absolute value. The image processing device 100 may determine a sample in the previous frame 530 corresponding to the sample value having the smallest absolute value of the difference, as a prediction sample.

As described above, when the sign of a first value of any one sample of the first filter kernel 415 and the sign of a second value of any one sample of the second filter kernel 425 are the same as each other, a difference between a sample value of a sample in the first feature map 417 and each of sample values of samples in the second feature maps 427 may be calculated through subtraction, whereas when the sign of the first value and the sign of the second value are different from each other, a difference between a sample value of a sample in the first feature map 417 and each of the sample values of the samples in the second feature maps 427 may be calculated through summation.

Referring to the upper-left sample of the first feature map 417 of FIG. 5, the image processing device 100 may calculate an absolute value of a difference between a sample value of the upper-left sample a1 of the first feature map 417 and each of sample values of upper-left samples of the second feature maps 427. For example, |a1-p0| may be calculated between the sample value of the upper-left sample a1 of the first feature map 417 and the sample value of the upper-left sample p0 of the second feature map A 427-1, and |a1-p1| may be calculated between the sample value of the upper-left sample a1 of the first feature map 417 and the sample value of the upper-left sample p1 of the second feature map B 427-2. When an absolute value of a difference between the sample value of the upper-left sample e2 of the second feature map I 427-9 and the sample value of the upper-left sample a1 of the first feature map 417 is the smallest, the sample e2 in the previous frame 530 corresponding to the upper-left sample e2 of the second feature map I 427-9 may be determined as a prediction sample of the upper-left sample a1 of the current frame 510.

In this manner, by comparing the sample values of the first feature map 417 with the sample values of the second feature maps 427, the prediction samples 430 corresponding to the respective samples of the current frame 510 may be identified.

In FIG. 7, it may be seen that prediction samples corresponding to the samples of the current frame 510 are determined to be b2, e2, f2, e2, f2, i2, h2, e2, and i2.

Although the motion prediction process is described above with reference to a process of determining a prediction sample in FIGS. 4 to 7, the motion prediction process may be a process of identifying a motion vector. Each of the second filter kernels 425 may be understood as a positional relationship between a current sample and a collocated sample of the previous frame 530, and samples around the collocated sample, that is, a motion vector candidate. In other words, the motion prediction process may be a process of determining a motion vector candidate (any one second filter kernel) indicating a sample that is most similar to a current sample from among multiple motion vector candidates (multiple second filter kernels), as a motion vector of the current sample.

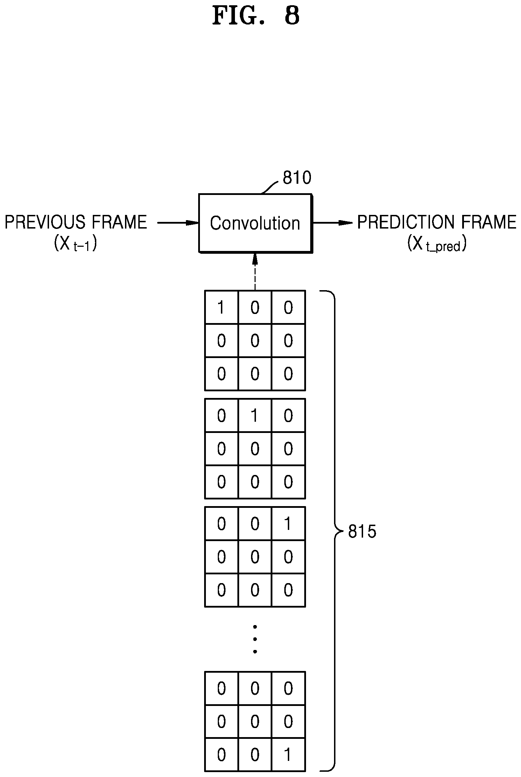

FIG. 8 is a diagram for describing the motion compensation process 220 illustrated in FIG. 2.

The motion compensation process is a process of changing sample values of samples of the previous frame $X_{t-1}$ located at the same positions as samples of the current frame Xt according to sample values of prediction samples. The prediction frame $X_{t\_pred}$ may be obtained through the motion compensation process.

The image processing device 100 may perform the motion compensation process through a convolution operation, as in the motion prediction process.

The image processing device 100 may select a third filter kernel to be used in motion compensation of each sample of the previous frame $X_{t-1}$ from among a plurality of predetermined third filter kernels 815, and apply a convolution operation based on the selected third filter kernel to each sample of the previous frame $X_{t-1}$. In this case, a third filter kernel corresponding to each sample of the previous frame $X_{t-1}$ may be selected.

The plurality of third filter kernels 815 may include a sample having a predetermined third value and samples having a value of 0, and the positions of samples having the third value in the third filter kernels 815 may be different from each other. The third value may be, for example, 1. In an embodiment, the plurality of second filter kernels 425 used in the motion prediction process may also be used in the motion compensation process.

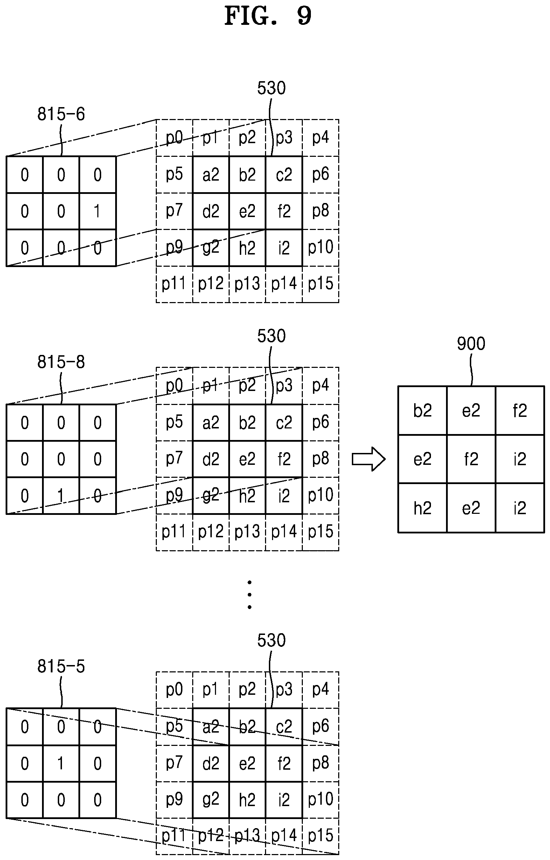

FIG. 9 is an example diagram illustrating a process of performing motion compensation on a previous frame by using a motion prediction result.

In order to distinguish between the third filter kernels 815, they are referred to as a third filter kernel A 815-1 to a third filter kernel I 815-9 according to the position of the sample having the third value.

The image processing device 100 may select a third filter kernel having the third value at a position corresponding to a prediction sample, for each of samples of the previous frame 530 located at the same positions as samples of the current frame 510.

First, descriptions will be provided based on sample a2 located at the upper left of the previous frame 530. When it is determined that a prediction sample of sample a1 located at the upper left of the current frame 510 is sample b2, the image processing device 100 may select, for sample a2, the third filter kernel F 815-6 including a sample having a value of 1 and located at the right of the center sample and the other samples having a value of 0. In this case, the image processing device 100 may derive the upper-left sample b2 of a prediction frame 900 through a multiplication operation and a sum operation based on 0, 0, 0, 0, 0, 1, 0, 0, and 0 of the third filter kernel F 815-6 and samples p0, p1, p2, p5, a2, b2, p7, d2, and e2 of the previous frame 530. That is, it may be seen that sample a2 is replaced with sample b2 in the prediction frame 900 through a convolution operation on sample a2 of the previous frame 530 and samples around sample a2 of the previous frame 530.

Next, when it is determined that a prediction sample of sample b1 located above the center sample of the current frame 510 is sample e2, the third filter kernel H 815-8 including a sample having a value of 1 and located below the center sample and the other samples having a value of 0 may be selected for sample b2. The image processing device 100 may derive sample e2 located above the center sample of the prediction frame 900 through a multiplication operation and a sum operation based on 0, 0, 0, 0, 0, 0, 0, 1, and 0 of the third filter kernel H 815-8 and samples p1, p2, p3, a2, b2, c2, d2, e2, and f2 of the previous frame 530. That is, it may be seen that sample b2 of the previous frame 530 is replaced with sample e2 in the prediction frame 900 through a convolution operation on sample b2 of the previous frame 530 and samples around sample b2 of the previous frame 530.

As a convolution operation is performed based on the third filter kernel 815 corresponding to each sample from the first sample to the last sample of the previous frame 530, the prediction frame 900 that is a prediction version of the current frame 510 may be generated.

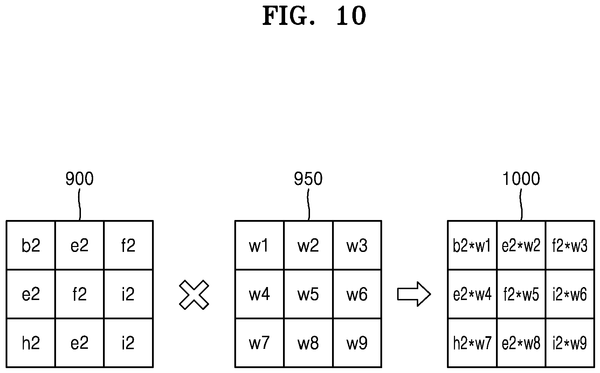

FIG. 10 is an example diagram illustrating a process of applying weights 950 to the prediction frame 900 obtained as a result of motion compensation.

The image processing device 100 may calculate the weight 950 based on a difference value between a current sample in the current frame 510 and a prediction sample in the previous frame 530 (or a collocated sample in the prediction frame 900). The image processing device 100 may calculate the weight 950 for each sample of the current frame 510.

As described above, the weights 950 indicate to what extent samples of the prediction frame 900 are helpful in processing the current frame 510.

The weight 950 may be derived based on Equation 1 below.

[Equation 1]

$$Weight = \frac{\sigma^2}{(Difference\ value)^2 + \sigma^2}$$

In Equation 1, σ denotes a predetermined constant and may be, for example, 16. Referring to Equation 1, it may be seen that, when a sample value of a current sample and a sample value of a prediction sample are equal to each other, the weight 950 is calculated to be 1, and as a difference value between the sample value of the current sample and the sample value of the prediction sample increases, the weight 950 decreases.

The image processing device 100 may obtain a weighted prediction frame 1000 by multiplying each sample of the prediction frame 900 by the weight 950 corresponding to the sample.

As described above, the image processing device 100 may obtain a weighted prediction output frame and a weighted prediction feature map by applying the corresponding weight 950 to each sample of a prediction output frame and a prediction feature map.

As described above, in an embodiment, the motion prediction process and the motion compensation process may be performed based on a convolution operation. Because the motion prediction process may be performed through one convolution operation (when the convolution operation 410 on a current frame is omitted) or two convolution operations as illustrated in FIG. 4, and the motion compensation process may be performed through one convolution operation as illustrated in FIG. 8, operation complexity may be significantly reduced.

Meanwhile, the above-described motion prediction process may also be applied to a downsampled current frame and a downsampled previous frame. This is for reducing load and complexity according to the motion prediction process. Here, the term 'downsampling' refers to a process of reducing the number of samples in a frame. Downsampling of a frame may be performed by using any of various methods. For example, the numbers of samples in a current frame and a previous frame may be reduced by pooling the current frame and the previous frame. Pooling may include max pooling or average pooling. Pooling may be clearly understood from pooling layers used in the field of artificial neural networks, and thus, detailed descriptions thereof will be omitted. In an embodiment, downsampling of a current frame and a previous frame may be performed through any of various known downsampling algorithms.

When the motion prediction process is performed on a downsampled current frame and a downsampled previous frame, as many motion vectors as samples included in the downsampled current frame may be derived. Because the number of motion vectors required in the motion compensation process is greater than the number of motion vectors obtained through a motion prediction process based on a downsampled frame, it is necessary to increase the number of motion vectors obtained in the motion prediction process.

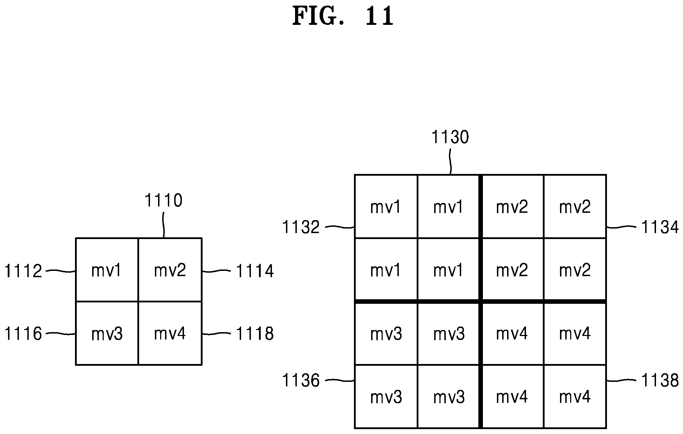

A method of increasing the number of motion vectors obtained in the motion prediction process will be described below with reference to FIG. 11.

FIG. 11 is a diagram for describing a method of increasing the number of motion vectors obtained from a downsampled frame.

Referring to FIG. 11, the size of a downsampled frame 1110 is 2x2, and the size of a frame 1130 before downsampling is 4x4. The size of the downsampled frame 1110 may be changed in various ways according to a downsampling rate.

By applying the above-described motion prediction process to the downsampled frame 1110, four motion vectors (i.e., filter kernels) corresponding to four samples included in the downsampled frame 1110 are derived. Because the size of the frame 1130 before downsampling is 4x4, 16 motion vectors are required in the motion compensation process.

For example, the image processing device 100 may group samples of the frame 1130 before downsampling according to the number of samples in the downsampled frame 1110. The image processing device 100 may allocate each motion vector derived in the motion prediction process to each sample group of the frame 1130 before downsampling. In this case, positions of the sample groups of the frame 1130 before downsampling and positions of the samples in the downsampled frame 1110 may be considered.

In detail, a motion vector mv1 derived for an upper-left sample 1112 from among samples 1112, 1114, 1116, and 1118 in the downsampled frame 1110 may be allocated to a sample group 1132 located at the upper left from among sample groups 1132, 1134, 1136, and 1138 of the frame 1130 before downsampling. Accordingly, motion compensation may be performed based on the motion vector mv1 on samples included in the sample group 1132 located at the upper left of the frame 1130. Here, it is noted that motion compensation is performed on a previous frame before downsampling.

A motion vector mv2 derived for the upper-right sample 1114 from among the samples 1112, 1114, 1116, and 1118 in the downsampled frame 1110 may be allocated to the sample group 1134 located at the upper right from among the sample groups 1132, 1134, 1136, and 1138 of the frame 1130 before downsampling. Accordingly, motion compensation may be performed based on the motion vector mv2 on samples included in the sample group 1134 located at the upper right of the frame 1130.

When the number of samples included in a sample group is large, applying the same motion vector to all of the samples included in the sample group may result in deterioration of the accuracy of motion compensation. As another example, the image processing device 100 may apply, to samples adjacent to a boundary with an adjacent sample group from among samples included in a sample group, a motion vector obtained by combining a motion vector allocated to the sample group with a motion vector allocated to the adjacent sample group.

As another example, the image processing device 100 may obtain motion vectors for motion compensation of the frame 1130 before downsampling by interpolating motion vectors obtained for the downsampled frame 1110. Examples of interpolation may include bilinear interpolation, bicubic interpolation, and nearest-neighbor interpolation.

When motion prediction is performed on the downsampled frame 1110, the number of weights derived in the weight derivation process is also less than the number of weights required in a gating process. Accordingly, the image processing device 100 increases the number of weights obtained through the weight derivation process. Here, the gating process may be applied to a prediction frame generated from a previous frame before downsampling through the motion compensation process.

For example, the image processing device 100 may group samples of the frame 1130 before downsampling according to the number of samples in the downsampled frame 1110. In addition, the image processing device 100 may allocate each weight derived in the weight derivation process to each sample group of the frame 1130 before downsampling. In this case, positions of the sample groups of the frame 1130 before downsampling and positions of the samples in the downsampled frame 1110 may be considered.

In detail, a first weight derived for the upper-left sample 1112 from among the samples 1112, 1114, 1116, and 1118 in the downsampled frame 1110 may be allocated to a sample group 1132 located at the upper left from among the sample groups 1132, 1134, 1136, and 1138 of the frame 1130 before downsampling. Accordingly, a gating process may be performed based on the first weight on samples included in the sample group 1132 located at the upper left in the frame 1130. In addition, a second weight derived for the upper-right sample 1114 from among the samples 1112, 1114, 1116, and 1118 in the downsampled frame 1110 may be allocated to the sample group 1134 located at the upper right from among the sample groups 1132, 1134, 1136, and 1138 of the frame 1130 before downsampling. Accordingly, a gating process may be performed based on the second weight on samples included in the sample group 1134 located at the upper right in the frame 1130.

As another example, the image processing device 100 may apply, to samples adjacent to a boundary with an adjacent sample group from among samples included in a sample group, a weight obtained by combining a weight allocated to the sample group and a weight allocated to the adjacent sample group.

As another example, the image processing device 100 may obtain weights for a gating process of the frame 1130 before downsampling by interpolating weights obtained for the downsampled frame 1110. Examples of interpolation may include bilinear interpolation, bicubic interpolation, and nearest-neighbor interpolation.

Although it is described above that the motion prediction process and the motion compensation processes are performed based on a convolution operation, this is merely an example, and the motion prediction process and the motion compensation process may be performed through a known algorithm used in inter prediction of a video codec.

For example, the motion prediction process may be performed based on a block matching algorithm or an optical flow algorithm. The block matching algorithm and the optical flow are algorithms for searching a previous frame for a sample or block that is most similar to a sample or block in a current frame. A motion vector between a sample or block in a current frame and a similar sample or block in a previous frame may be obtained through a block matching algorithm and an optical flow algorithm, and a prediction frame may be obtained by performing motion compensation on the previous frame based on the obtained motion vector. The block matching algorithm and the optical flow algorithm are well known to those skill in the art, and thus, detailed descriptions thereof will be omitted.

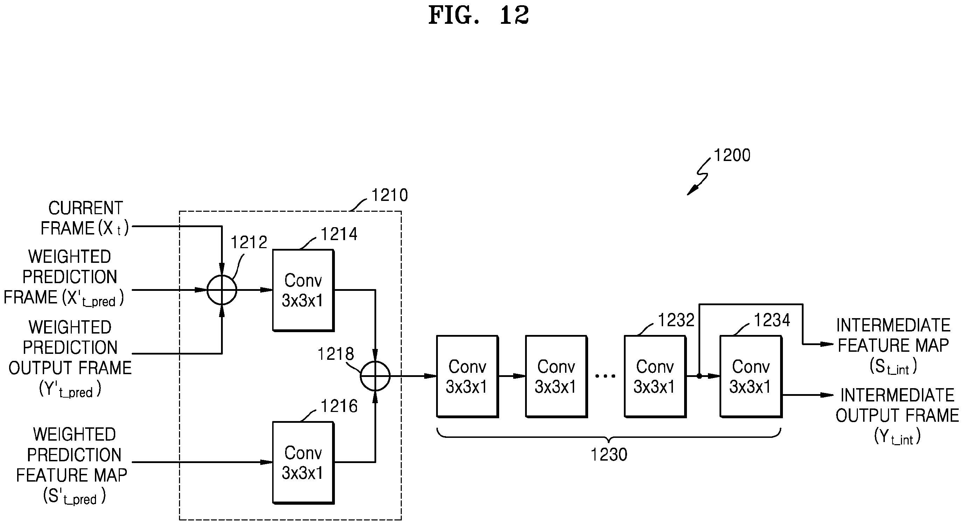

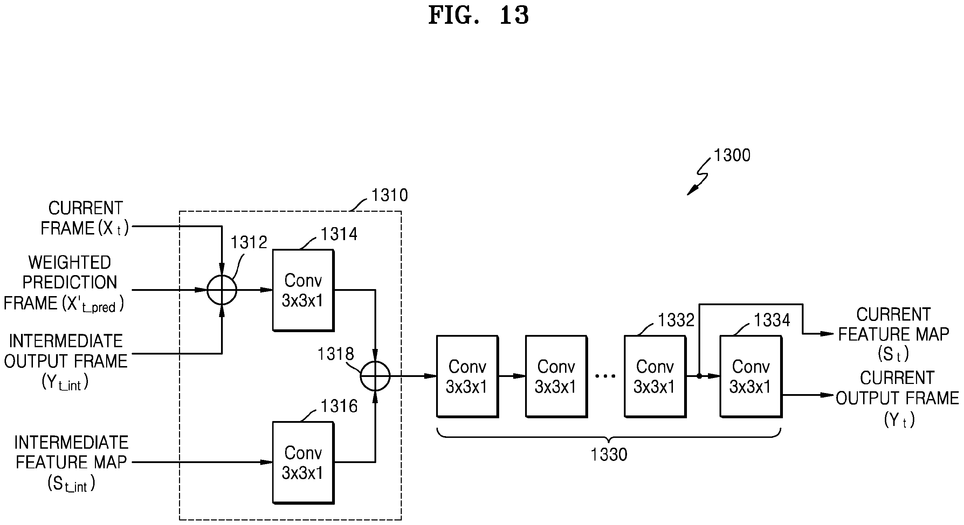

Hereafter, a neural network used to process frames will be described in detail with reference to FIGS. 12 and 13.

As described above with reference to FIG. 2, as the current frame $X_t$, the weighted prediction frame $X'_{t\_pred}$ the weighted prediction output frame $Y'_{t\_pred}$ and the weighted prediction feature map $S'_{t\_pred}$ are processed by using the neural network 250, the current output frame $Y_t$ corresponding to the current frame $X_t$ may be obtained.

The neural network 250 may include one or more sub-neural networks, and each sub-neural network may include a fusion layer and a plurality of convolutional layers.

A structure of a first sub-neural network 1200 from among the one or more sub-neural networks is illustrated in FIG. 12.

Referring to FIG. 12, the first sub-neural network 1200 may include a fusion layer 1210 including a first convolutional layer 1214 and a second convolutional layer 1216, and a plurality of third convolutional layers 1230. In a convolutional layer, a convolution operation may be performed on input data, based on a filter kernel determined through training.

The fusion layer 1210 may fuse the current frame $X_t$ with data output through a gating process, that is, the weighted prediction frame $X'_{t\_pred}$, the weighted prediction output frame $Y'_{t\_pred}$, and the weighted prediction feature map $S'_{t\_pred}$.

First, the current frame $X_t$, the weighted prediction frame $X'_{t\_pred}$ and the weighted prediction output frame $Y'_{t\_pred}$ may be concatenated (1212), and then input to the first convolutional layer 1214.

Concatenation may refer to a process of combining the current frame $X_t$, the weighted prediction frame $X'_{t\_pred}$ and the weighted prediction output frame $Y'_{t\_pred}$ with each other in a channel direction.

Data obtained as a result of the concatenation 1212 may be convolution-processed in the first convolutional layer 1214. 3x3x1 in the first convolutional layer 1214 indicates convolution processing of input data by using one filter kernel having a size of 3x3. One feature map may be generated by one filter kernel as a result of convolution processing.

Separately from input of a result of concatenating the current frame $X_t$, the weighted prediction frame $X'_{t\_pred}$, and the weighted prediction output frame $Y'_{t\_pred}$ to the first convolutional layer 1214, the weighted prediction feature map $S'_{t\_pred}$ may be input to the second convolutional layer 1216. The weighted prediction feature map $S'_{t\_pred}$ may be convolution-processed in the second convolutional layer 1216. 3x3x1 in the second convolutional layer 1216 indicates convolution processing of input data by using one filter kernel having a size of 39x3. One feature map may be generated by one filter kernel as a result of convolution processing.

Data output from the first convolutional layer 1214 and data output from the second convolutional layer 1216 may be concatenated (1218), and then sequentially processed by the plurality of third convolutional layers 1230.

The reason why, unlike the current frame $X_t$, the weighted prediction frame $X'_{t\_pred}$, and the weighted prediction output frame $Y'_{t\_pred}$, only the weighted prediction feature map $S'_{t\_pred}$ is separately input to the second convolutional layer 1216 in the fusion layer 1210 is that a domain of the weighted prediction feature map $S'_{t\_pred}$ is different from domains of the current frame $X_t$, the weighted prediction frame $X'_{t\_pred}$, and the weighted prediction output frame $Y'_{t\_pred}$. Because the weighted prediction feature map $S'_{t\_pred}$ is data of a feature domain obtained in a process of processing a frame whereas the current frame $X_t$, the weighted prediction frame $X'_{t\_pred}$, and the weighted prediction output frame $Y'_{t\_pred}$ are image data corresponding to a processing target or image data obtained as a processing result, they are convolution-processed and then concatenated separately. That is, the first convolutional layer 1214 and the second convolutional layer 1216 may function to match the domains of the current frame $X_t$, the weighted prediction frame $X'_{t\_pred}$, the weighted prediction output frame $Y'_{t\_pred}$, and the weighted prediction feature map $S'_{t\_pred}$.

As the data output from the first convolutional layer 1214 and the data output from the second convolutional layer 1216 are concatenated (1218) and then sequentially processed by the plurality of third convolutional layers 1230, the intermediate output frame $Y_{t\_int}$ may be obtained. As illustrated in FIG. 12, the intermediate output frame $Y_{t\_int}$ is output from a last layer 1234 of the plurality of third convolutional layers 1230, and the intermediate feature map $S_{t\_int}$ is output from a previous layer 1232 of the last layer 1234. Although FIG. 12 illustrates that the last layer 1234 is located next to the previous layer 1232, one or more convolutional layers may be located between the previous layer 1232 and the last layer 1234.

3x3x1 in the third convolutional layers 1230 indicates convolution processing of input data by using one filter kernel having a size of 3x3. One feature map or one output frame may be generated by one filter kernel as a result of convolution processing.

The intermediate feature map $S_{t\_int}$ and the intermediate output frame $Y_{t\_int}$ output from the plurality of third convolutional layers 1230 may be input to a next sub-neural network.

When the neural network includes only one sub-neural network, the current output frame $Y_t$ may be output from the last layer 1234 of the plurality of third convolutional layers 1230, and the current feature map $S_t$ may be output from the previous layer 1232 of the last layer 1234.

The current output frame $Y_t$ and the current feature map $S_t$ may be used in a process of processing a next frame.

The structure of the first sub-neural network 1200 illustrated in FIG. 12 is an example, and the number of convolutional layers included in the first sub-neural network 1200, the size of a filter kernel, and the number of filter kernels may be changed in various ways according to an embodiment.

FIG. 13 is a diagram illustrating a structure of a last sub-neural network 1300 included in a neural network.

Like the first sub-neural network 1200, the last sub-neural network 1300 may include a fusion layer 1310 including a first convolutional layer 1314 and a second convolutional layer 1316, and a plurality of third convolutional layers 1330. In a convolutional layer, a convolution operation may be performed on input data, based on a filter kernel determined through training.

The fusion layer 1310 may fuse the current frame $X_t$, the weighted prediction frame $X'_{t\_pred}$, the intermediate output frame $Y_{t\_int}$ that is output from a previous sub-neural network, and the intermediate feature map $S_{t\_int}$ that is output from the previous sub-neural network.

First, the current frame $X_t$, the weighted prediction frame $X'_{t\_pred}$, and the intermediate output frame $Y_{t\_int}$ may be concatenated (1312), and then are input to the first convolutional layer 1314.

Data obtained as a result of the concatenation 1312 may be convolution-processed in the first convolutional layer 1314. 3x3x1 in the first convolutional layer 1314 indicates convolution processing of input data by using one filter kernel having a size of 3x3. One feature map may be generated by one filter kernel as a result of convolution processing.

Separately from input of a result of concatenating the current frame $X_t$, the weighted prediction frame $X'_{t\_pred}$, and the intermediate output frame $Y_{t\_int}$ to the first convolutional layer 1314, the intermediate feature map $S_{t\_int}$ may be input to the second convolutional layer 1316. As described above, the intermediate feature map $S_{t\_int}$ may be convolution-processed in the second convolutional layer 1316. 3x3x1 in the second convolutional layer 1316 indicates convolution processing of input data by using one filter kernel having a size of 39x3. One feature map may be generated by one filter kernel as a result of convolution processing.

As described above, the first convolutional layer 1314 and the second convolutional layer 1316 in the fusion layer 1310 may function to match domains of the current frame Xt, the weighted prediction frame X'$_{t\_pred}$ the intermediate output frame Y$_{t\_int}$, and the intermediate feature map S$_{t\_int}$.

Data output from the first convolutional layer 1314 and data output from the second convolutional layer 1316 may be concatenated (1318), and then sequentially processed by the plurality of third convolutional layers 1330.

As the data output from the first convolutional layer 1314 and the data output from the second convolutional layer 1316 are concatenated (1318) and then sequentially processed by the plurality of third convolutional layers 1330, the current output frame Yt may be obtained.

As shown in FIG. 13, the current output frame Yt may be output from a last layer 1334 of the plurality of third convolutional layers 1330, and the current feature map St may be output from a previous layer 1332 of the last layer 1334.

Although FIG. 13 illustrates that the last layer 1334 is located next to the previous layer 1332, one or more convolutional layers may be located between the previous layer 1332 and the last layer 1334.

When the sub-neural network 1300 of FIG. 13 is not a last sub-neural network, the intermediate output frame Y$_{t\_int}$ may be output from the last layer 1334 of the plurality of third convolutional layers 1330, and the intermediate feature map S$_{t\_int}$ may be output from the previous layer 1332 of the last layer 1334. The output intermediate output frame Y$_{t\_int}$ and the output intermediate feature map S$_{t\_int}$ may be input to a next sub-neural network.

3x3x1 in the third convolutional layers 1330 indicates convolution processing of input data by using one filter kernel having a size of 3x3. One feature map or one output frame may be generated by one filter kernel as a result of convolution processing.

The structure of the sub-neural network illustrated FIG. 13 is an example, and the number of convolutional layers included in the sub-neural network 1300, the size of a filter kernel, and the number of filter kernels may be changed in various ways according to an embodiment.

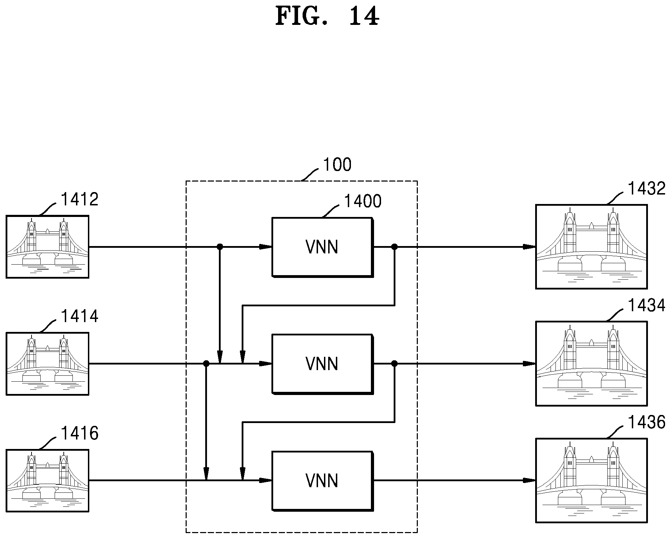

FIG. 14 is a diagram illustrating an application example of an image processing method, according to an embodiment.

The application example illustrated in FIG. 14 shows a process of obtaining output frames having a resolution higher than those of input frames, through image processing of the input frames.

A video neural network (VNN) 1400 of FIG. 14 may correspond to the neural network 250 of FIG. 2. It is assumed that the above-described motion prediction process, motion compensation process, weight derivation process, and gating process are performed before frames are input to the VNN 1400.

As a first frame 1412 is processed by the VNN 1400, a first output frame 1432 having a resolution higher than that of the first frame 1412 may be obtained. The first frame 1412 and the first output frame 1432 are input to the VNN 1400 along with a second frame 1414, and a second output frame 1434 having a resolution higher than that of the second frame 1414 may be obtained as a result of processing by the VNN 1400. The second frame 1414 and the second output frame 1434 may be input to the VNN 1400 along with a third frame 1416, and a third output frame 1436 having a resolution higher than that of the third frame 1416 may be obtained as a result of processing by the VNN 1400.

The application example illustrated in FIG. 14 may be useful for increasing a resolution of frames received from a server or the like. The server may transmit a small bitrate to the image processing device 100 by encoding frames having a low resolution, and the image processing device 100 may obtain output frames having a higher resolution by processing frames having a low resolution through decoding.

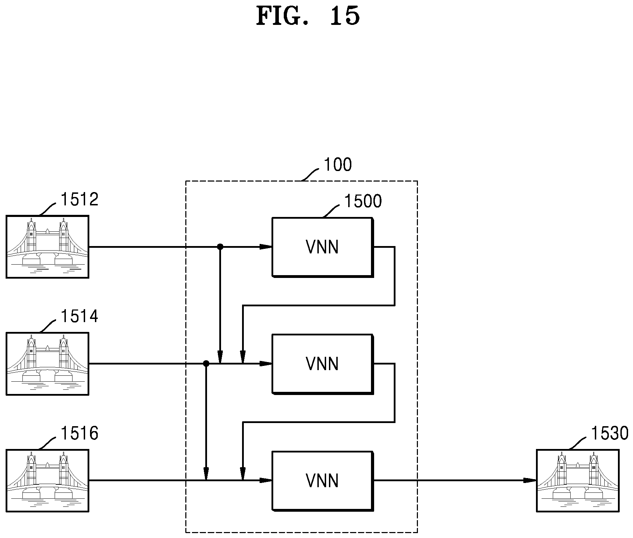

FIG. 15 is a diagram illustrating an application example of an image processing method, according to another embodiment.

The application example illustrated in FIG. 15 shows a process of obtaining one output frame combined with characteristics of input frames through image processing of the input frames.

As described above, it is assumed that the above-described motion prediction process, motion compensation process, weight derivation process, and gating process are performed before frames are input to a VNN 1500.

A first frame 1512 may be input to the VNN 1500, and a result of processing the first frame 1512 by the VNN 1500 may be input to the VNN 1500 along with the first frame 1512 and a second frame 1514. Then a result of processing by the VNN 1500 may be input again to the VNN 1500 along with the second frame 1514 and a third frame 1516. As a result of processing by the VNN 1500, an output frame 1530 in which all characteristics of the first frame 1512, the second frame 1514, and the third frame 1516 are reflected may be obtained.

The application example illustrated in FIG. 15 may be useful for increasing a dynamic range of frames. For example, when one frame is captured with a long exposure time and another frame is captured with a short exposure time, an output frame having a high dynamic range may be obtained by including characteristics of the two frames.

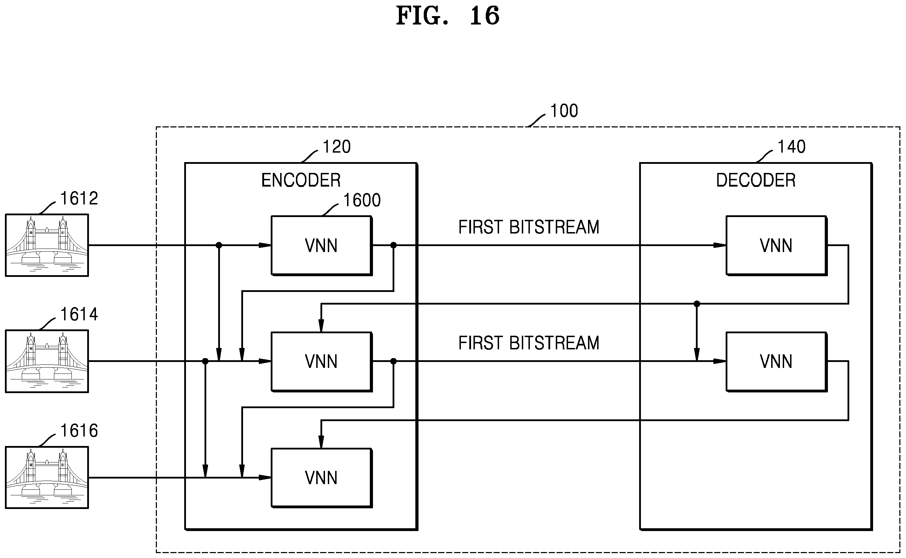

FIG. 16 is a diagram illustrating an application example of an image processing method, according to another embodiment.

The application example illustrated in FIG. 16 considers a case where the image processing device 100 operates as a server or an image provider. In general, a server may encode an image and transmit a result of the encoding to a terminal device, and the terminal device may decode a bitstream received from the server to reconstruct the image.

When processing frames to compensate for loss occurring in encoding/decoding processes, the image processing device 100 may also use a frame that is encoded by an encoder 120 and then decoded by a decoder 140.

In detail, the image processing device 100 may obtain a first output frame A (not shown) by processing a first frame 1612 based on a VNN 1600. A first bitstream may be generated through encoding of the first output frame A, and the first output frame A may be reconstructed through decoding of the first bitstream. The image processing device 100 may obtain a first output frame B (not shown) by processing the first output frame A by using the VNN 1600.

The first frame 1612, the first output frame A, and the first output frame B may be input to the VNN 1600 along with a second frame 1614. Although one output frame is input to the VNN 1600 along with a next frame in the above embodiments, in the application example illustrated in FIG. 16, two output frames may be input to the VNN 1600 along with a next frame. A motion compensation process and a gating process may be applied to both the two output frames before being input to the VNN 1600.

The second frame 1614, the first frame 1612, the first output frame A, and the first output frame B may be processed by the VNN 1600 and thus a second output frame A may be obtained. A second bitstream may be generated through encoding of the second output frame A, and the second output frame A may be reconstructed through decoding of the second bitstream. The image processing device 100 may obtain a second output frame B by processing the first output frame B by using the VNN 1600. Although not illustrated, the image processing device 100 may obtain a second output frame B (not shown) by processing the first output frame A reconstructed through decoding along with the second output frame A and the first output frame B by using the VNN 1600.

The second frame 1614, the second output frame A, and the second output frame B may be input to the VNN 1600 along with a third frame 1616. The third frame 1616, the second frame 1614, the second output frame A, and the second output frame B may be processed by the VNN 1600 and thus a third output frame A may be obtained.

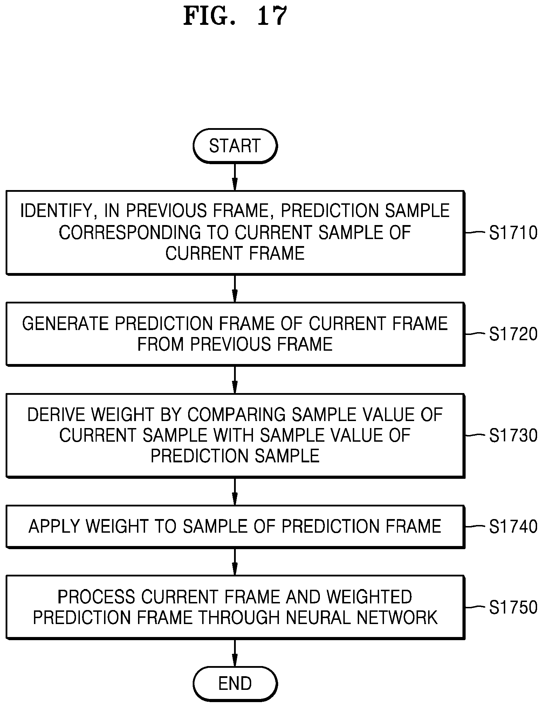

FIG. 17 is a flowchart of a method of processing multiple frames, according to an embodiment.

In operation S1710, the image processing device 100 identifies, in a previous frame, a prediction sample corresponding to a current sample of a current frame.

In order to identify the prediction sample, motion prediction may be performed on the current frame and the previous frame. As described above, in order to identify the prediction sample, a convolution operation may be performed on the current frame and the previous frame.

In operation S1720, the image processing device 100 generates a prediction frame of the current frame by changing a sample value of a collocated sample of the previous frame according to a sample value of the prediction sample.

The prediction frame may be generated through a convolution operation on the previous frame based on filter kernels corresponding to motion vectors.

In operation S1730, the image processing device 100 derives a weight by comparing a sample value of the current sample with the sample value of the prediction sample.

The image processing device 100 may determine the weight such that, as a difference value between the sample value of the current sample and the sample value of the prediction sample increases, the weight decreases, and as the difference value between the sample value of the current sample and the sample value of the prediction sample decreases, the weight increases.

In operation S1740, the image processing device 100 applies the weight to a collocated sample of the prediction frame.

The image processing device 100 may multiply the collocated sample of the prediction frame by the weight.

In operation S1750, the image processing device 100 obtains a current output frame by processing the current frame and a weighted prediction frame through a neural network including a convolutional layer.

Meanwhile, in the above-described motion prediction process 210, a prediction sample of a current sample may be identified from among a collocated sample of the previous frame $X_{t-1}$ corresponding to the current sample of the current frame Xt, and samples around the collocated sample, and relative positions of the current sample in the current frame Xt and the prediction sample in the previous frame $X_{t-1}$ may be determined as a motion vector. However, in the motion prediction process 210, only the collocated sample of the previous frame $X_{t-1}$ and the samples around the collocated sample are used as comparison targets, and thus, there is a possibility that the motion vector corresponding to the current sample is vulnerable to noise.

For example, when a motion of an object included in the current frame Xt and the previous frame $X_{t-1}$ is large, or when the resolutions of the current frame Xt and the previous frame $X_{t-1}$ are high, the prediction sample corresponding to the current sample may not be located around the collocated sample of the previous frame $X_{t-1}$. Here, as a prediction sample is identified around the collocated sample of the previous frame $X_{t-1}$, an inaccurate motion vector may be derived.

Hereinafter, a method of more accurately determining motion vectors corresponding to samples in a frame, even when the frame includes both an object with a large motion and an object with a small motion, or the resolution of the frame is high, will be described.

A motion prediction process to be described below is another embodiment of the motion prediction process 210 illustrated in FIG. 2, and in the motion prediction process, processing by the motion compensation process 220, the weight derivation process 230, the gating process 240, and the neural network 250 may also be performed. However, the motion prediction process to be described below is not only for processing the current frame illustrated in FIG. 2. The motion prediction process to be described below may be applied to various fields for deriving a motion vector from two frames.

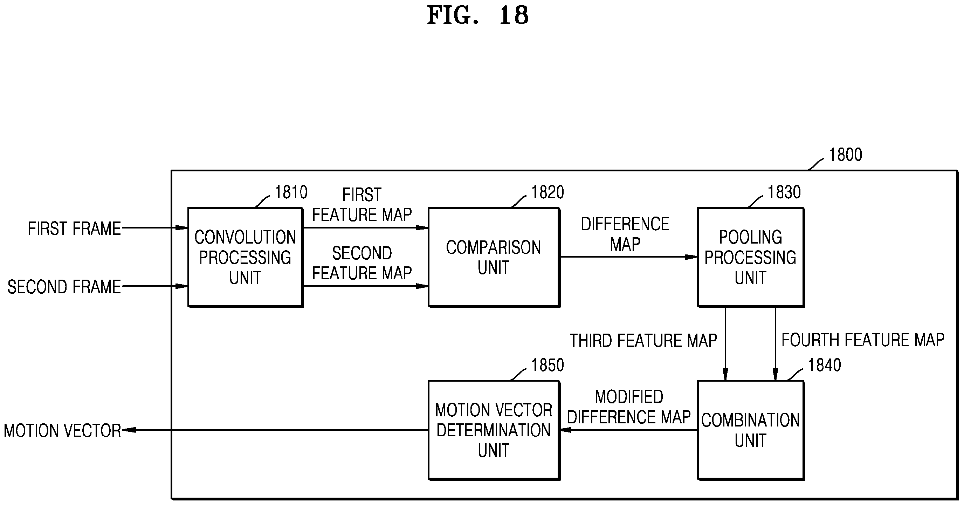

FIG. 18 is a diagram illustrating a configuration of an image processing device 1800 according to another embodiment.

Referring to FIG. 18, the image processing device 1800 according to another embodiment may include a convolution processing unit 1810, a comparison unit 1820, a pooling processing unit 1830, a combination unit 1840, and a motion vector determination unit 1850.

The convolution processing unit 1810, the comparison unit 1820, the pooling processing unit 1830, the combination unit 1840, and the motion vector determination unit 1850 may be implemented as at least one processor.

The convolution processing unit 1810, the comparison unit 1820, the pooling processing unit 1830, the combination unit 1840, and the motion vector determination unit 1850 may operate according to one or more instructions stored in a memory.

The convolution processing unit 1810 and the pooling processing unit 1830 may include at least one arithmetic logic unit (ALU) for a convolution operation and a pooling operation to be described below. For a convolution operation and a pooling operation, the ALU may include a multiplier configured to perform a multiplication operation, and an adder configured to perform an addition operation.

The image processing device 1800 illustrated in FIG. 18 is for performing a motion prediction process, and in an embodiment, may also perform a motion compensation process.

The convolution processing unit 1810 may obtain a first feature map by convolution-processing a first frame based on a first filter kernel, and obtain a plurality of second feature maps by convolution-processing a second frame based on a plurality of second filter kernels.

The first frame and the second frame may be still images captured at different time points. For example, the first frame may be the current frame Xt, and the second frame may be a previous frame $X_{t-n}$ (n is an integer of 1 or greater). The first frame may be a patch frame obtained by dividing a first entire frame, and the second frame may be a patch frame obtained by dividing a second entire frame.

The convolution processing unit 1810 may sequentially perform a convolution operation based on the first filter kernel on samples of the first frame according to a stride, and sequentially perform a convolution operation based on the plurality of second filter kernels on samples of the second frame according to a stride. The strides of the convolution operations based on the first filter kernel and the second filter kernels may be 1.

As the convolution operation based on the first filter kernel is performed on a current sample of the first frame and samples around the current sample, a sample value of a collocated sample of the first feature map may be obtained. In addition, as the convolution operation based on the plurality of second filter kernels is performed on a collocated sample of the second frame and samples around the collocated sample, sample values of collocated samples of the plurality of second feature maps may be obtained.

The first filter kernel and the plurality of second filter kernels may each have a certain size. For example, the first filter kernel and the plurality of second filter kernels may have a size of 3x3, 4x4, or 5x5.

As a result of the convolution operations on the first frame and the second frame based on the first filter kernel and the plurality of second filter kernels, the first feature map and the second feature maps having the same size as the first frame and the second frame may be obtained. In order to obtain the first feature map and the second feature maps having the same size as the first frame and the second frame, the convolution processing unit 1810 may pad the first frame and the second frame.

In the first filter kernel, a sample corresponding to a current sample may have a preset first value, and the other samples may have a value of 0. The first filter kernel is applied to a current sample of the first frame and samples around the current sample, wherein the sample corresponding to the current sample refers to a sample applied to a multiplication operation with the current sample from among the samples of the first filter kernel.

As the sample of the first filter kernel corresponding to the current sample has the preset first value, samples of the first feature map may be calculated by multiplying sample values of samples of the first frame by the first value. Accordingly, when the first value is 1, the sample values of the first feature map are equal to the sample values of the first frame, respectively.

In an embodiment, the convolution operation on the first frame may be omitted. This is because, when the sample of the first filter kernel corresponding to the current sample has a value of 1 and the other samples have a value of 0, the first feature map obtained as a result of the convolution operation is the same as the first frame.

The plurality of second filter kernels used in the convolution operation on the second frame may have a value of 0 and a preset second value. The preset second value may be equal to the preset first value. For example, both the first value and the second value may be 1. When the first value and the second value are equal to each other, the first filter kernel may correspond to any one of the plurality of second filter kernels.

In an embodiment, the sign of the preset first value may be opposite to the sign of the preset second value. For example, when the first value is 1, the second value may be -1.

Any one of samples of the plurality of second filter kernels may have the preset second value, and the other samples may have a value of 0. The positions of samples having the second value in the plurality of second filter kernels may be different from each other.

The number of second filter kernels may vary depending on the size of the second filter kernels. The number of second filter kernels may be equal to the number of samples included in each of the second filter kernels. For example, when the size of the second filter kernels is 3x3, the number of second filter kernels may be 9. This is because the positions of samples having the second value in the respective second filter kernels are different from each other.

The second feature maps may be obtained through a convolution operation on the second frame using the second filter kernels. The number of second feature maps is equal to the number of second filter kernels.

The second filter kernels may be used to extract a sample value of any one of a collocated sample of the second frame and samples around the collocated sample. For example, the second filter kernel in which the upper-left sample has the second value may be used to extract a sample value of a sample at the upper left of a collocated sample of the second frame, and the second filter kernel in which the upper-right sample has the second value may be used to extract a sample value of a sample at the upper right of a collocated sample of the second frame. The sample value of the second frame extracted by the second filter kernel may be multiplied by the second value, and a result of the multiplication may be allocated to the collocated sample of the second feature map.

The first feature map and the plurality of second feature maps obtained by the convolution processing unit 1810 may be provided to the comparison unit 1820.

The comparison unit 1820 may generate difference maps between the first feature map and the second feature maps, respectively. The difference maps indicate how much the sample values in the first feature map differ from the sample values at the same positions in the respective second feature maps.

For example, absolute values of values obtained by subtracting the sample values at the same positions in the respective second feature maps from the sample values in the first feature map (or, the sum of the sample values in the first feature map and the sample values at the same positions in the respective second feature maps) may be sample values of the difference maps.

For example, absolute values of values obtained by subtracting the sample values of collocated samples in the respective second feature maps from sample values of collocated samples in the first feature map may be sample values of collocated samples of the difference maps.

The difference maps generated by the comparison unit 1820 may be provided to the pooling processing unit 1830.

The pooling processing unit 1830 may perform pooling on a plurality of processed maps. Here, the pooling may include average pooling or median pooling.

In detail, the pooling processing unit 1830 may generate a plurality of third feature maps by pooling the difference maps based on a filter kernel having a first size, and generate a plurality of fourth feature maps by pooling the difference maps based on a filter kernel having a second size. Here, the first size and the second size may be different from each other.

In an embodiment, the pooling processing unit 1830 may generate a plurality of fifth feature maps by pooling the difference maps based on a filter kernel having a third size that is different from the first size and the second size.

The number of samples in the difference map used in one pooling process varies depending on the size of the filter kernel. For example, in the case of a filter kernel having a size of 2x2, four samples in each difference map are pooled, and the next four samples in each difference map are pooled according to a stride. As another example, in the case of a filter kernel having a size of 4x4, 16 samples in each difference map are pooled, and the next 16 samples in each difference map are pooled according to a stride.

A first stride used in pooling based on a filter kernel 2215 having the first size and the second stride used in pooling based on a filter kernel 2216 having the second size may be different from each other. The first size and the first stride may be greater than the second size and the second stride.

For example, the first size and the first stride may be k (k is a natural number), and the second size and the second stride may be k/2. That the size is k or k/2 means that the horizontal or vertical size of the filter kernel is k or k/2. In other words, that the first size is k means that the number of horizontal or vertical samples used in one pooling process is k. Similarly, that the second size is k/2 means that the number of horizontal or vertical samples used in one pooling process is k/2.

The pooling according to the filter kernel having a size of k and the stride k serves to remove noise components from the difference map calculated for each sample, considering the direction of a motion in a relatively large area. In addition, the pooling according to the filter kernel having a size of k/2 and the stride k/2 serves to alleviate blurring that may occur due to pooling based on a large filter kernel, considering a motion in a relatively small area.

The difference maps represent differences between the current sample in the first frame, and the collocated sample in the second frame and samples around the collocated sample, and thus, as described above, when motion information of an object is large or the resolution of the first frame is higher than that of the second frame, a motion vector of the current sample may not be accurately calculated.

Accordingly, the pooling processing unit 1830 performs pooling on the difference maps based on filter kernels having different sizes such that even samples far away from the collocated sample in the second frame affect calculation of a motion vector of the current sample. That is, the entire context of the second frame is considered.

The combination unit 1840 may generate a plurality of modified difference maps by combining the plurality of third feature maps with the plurality of fourth feature maps.

The combination unit 1840 may generate a modified difference map corresponding to any one difference map by combining the third feature map and the fourth feature map generated through pooling on the difference map. In addition, the combination unit 1840 may generate a modified difference map corresponding to another difference map by combining the third feature map and the fourth feature map generated through pooling on the difference map.

The combination unit 1840 may generate a plurality of modified difference maps by weighted-summing samples of the plurality of third feature maps and samples of the plurality of fourth feature maps according to predetermined weights.

The combination unit 1840 may determine weights applied to the plurality of third feature maps and weights applied to the plurality of fourth feature maps to be different from each other.

For example, when the first size of the filter kernel used to generate the plurality of third feature maps is greater than the second size of the filter kernel used to generate the plurality of fourth feature maps, and a motion of an object included in the first frame and the second frame is large, the combination unit 1840 may determine the weights applied to the third feature maps to be greater than the weights applied to the fourth feature maps. Accordingly, samples far away from the collocated sample of the second frame corresponding to the current sample may affect more determination of a motion vector of the current sample.

On the contrary, when the motion of the object included in the first frame and the second frame is small, the combination unit 1840 may determine the weights applied to the third feature maps to be less than the weights applied to the fourth feature maps.

The combination unit 1840 may determine the weights to be applied to the third feature maps and weights to be applied to the fourth feature maps according to content of the first frame and the second frame.

For example, when the first frame and the second frame are frames constituting a sports game or an action movie (i.e., frames of a video with a large motion of an object), and the first size of the filter kernel used to generate the third feature maps is greater than the second size of the filter kernel used to generate the fourth feature maps, the weights applied to the third feature maps may be determined to be greater than the weights applied to the fourth feature maps.

As another example, when the first frame and the second frame are frames constituting a performance video or a talk show video (i.e., frames of a video with a small motion of an object), the weights applied to the third feature maps may be determined to be less than the weights applied to the fourth feature maps.

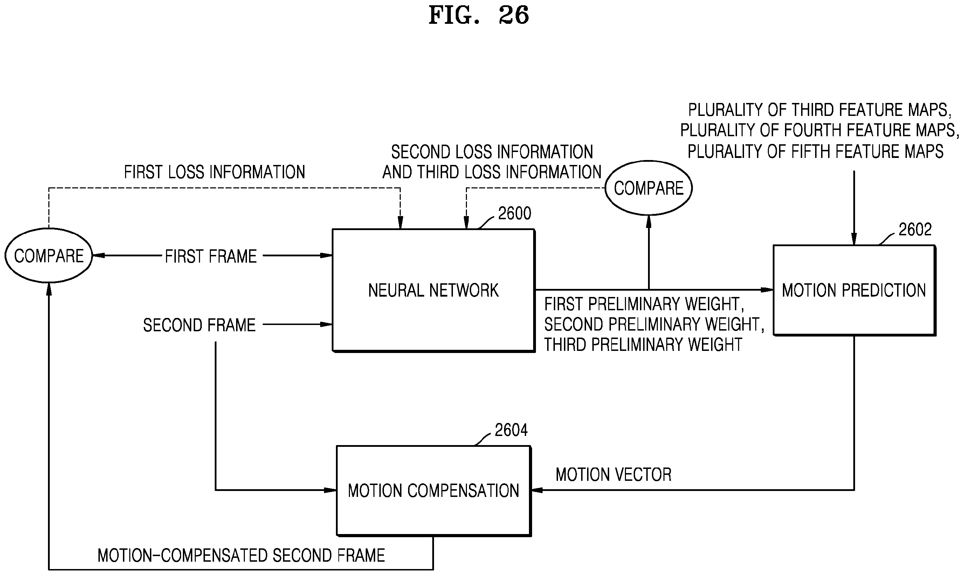

Weights to be applied to feature maps generated through pooling may be determined based on a neural network, which will be described below with reference to FIG. 26.

The motion vector determination unit 1850 may derive motion vectors corresponding to samples in the first frame by using the plurality of modified difference maps.

In an embodiment, the motion vector determination unit 1850 may identify any one collocated sample by considering the sizes of collocated samples of the plurality of modified difference maps corresponding to the current sample of the first frame.

In an embodiment, the motion vector determination unit 1850 may identify the collocated sample having the smallest size from among the collocated samples of the plurality of modified difference maps.

The motion vector determination unit 1850 may identify the second filter kernel used to obtain the second feature map corresponding to the modified difference map including the identified collocated sample. Because the plurality of second filter kernels, the plurality of second feature maps, the plurality of difference maps, and the plurality of modified difference maps correspond to each other in a one-on-one manner, the motion vector determination unit 1850 may identify the second filter kernel corresponding to the modified difference map including the identified collocated sample.

The motion vector determination unit 1850 may determine the identified second filter kernel as a motion vector corresponding to the current sample.

Based on the motion vectors corresponding to samples in the first frame being determined, the convolution processing unit 1810 may modify the second frame to be similar to the first frame by applying motion compensation to the second frame.

The convolution processing unit 1810 may perform motion compensation by convolution-processing the second frame based on a filter kernel corresponding to the motion vector. The filter kernel-based motion compensation process is described above with reference to FIGS. 8 and 9, and thus, detailed descriptions thereof will be omitted.

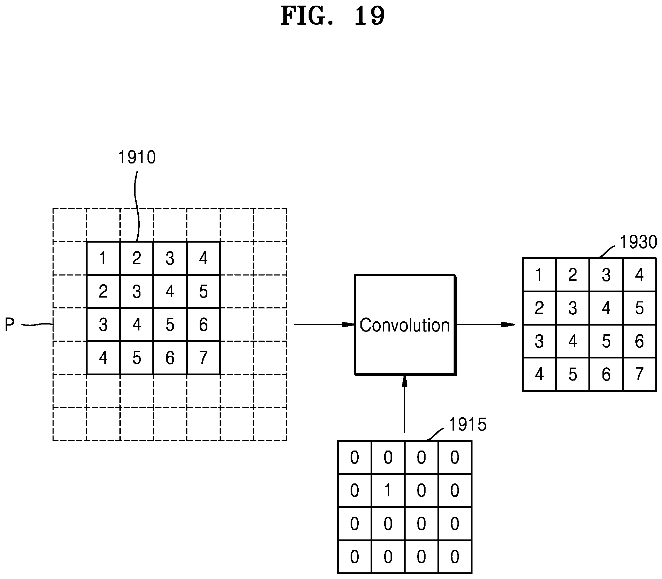

Hereinafter, an detailed example of a motion prediction process by the image processing device 1800 will be described with reference to FIGS. 19 to 24.

FIG. 19 is a diagram for describing convolution processing on a first frame 1910.

FIG. 19 illustrates that the first frame 1910 and a first filter kernel 1915 have a size of 4x4, but this is only an example, and the size of the first frame 1910 and the first filter kernel 1915 may vary.

A first feature map 1930 may be generated through a convolution operation between sample values of the first frame 1910 and samples of the first filter kernel 1915. The size of the first feature map 1930 may also be 4x4, which is equal to the size of the first frame 1910.

Among the samples of the first filter kernel 1915, a sample used for a multiplication operation with each of the samples in the first frame 1910 in the convolution operation may have a value of 1, and the other samples may have a value of 0. In an embodiment, when the position of the uppermost-leftmost sample among the samples of the first filter kernel 1915 is (0,0), a sample value at the position (1, 1) may be 1, and the other sample values may be 0. When a convolution operation is performed between the first filter kernel 1915 and the first frame 1910 while shifting the first filter kernel 1915 according to a stride, the sample at the position (1, 1) in the first filter kernel 1915 may be used for a multiplication operation with each sample of the first frame 1910.

The convolution operation may be performed between the first filter kernel 1915 and the samples in the first frame 1910 while shifting the first filter kernel 1915 according to the stride (in FIG. 19, the stride is 1). Because the sample value of the first filter kernel 1915 used for the multiplication operation with each of the samples in the first frame 1910 in the convolution operation is 1, the first feature map 1930 that is the same as the first frame 1910 may be generated.

In FIG. 19, portions P indicated by dotted lines outside the first frame 1910 are padding areas, and the convolution processing unit 1810 may pad the first frame 1910 in order to generate the first feature map 1930 having the same size as the first frame 1910. Sample values of the padding area may be set to 0, but are not limited thereto.

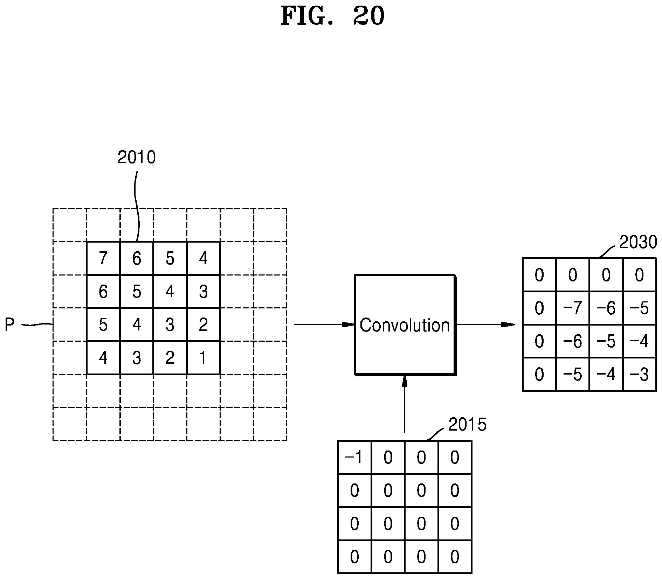

FIG. 20 is a diagram for describing convolution processing on a second frame 2010.

FIG. 20 illustrates only convolution processing by one second filter kernel 2015 for clear description. However, as described above, a plurality of second feature maps corresponding to a plurality of second filter kernels may be generated through convolution processing by the plurality of second filter kernels, respectively. The convolution processing by second filter kernels other than the second filter kernel 2015 illustrated in FIG. 20 among a plurality of second filter kernels may be the same as a process to be described below.

FIG. 20 illustrates that the second frame 2010 and a second filter kernel 2015 have a size of 4x4, but this is only an example, and the size of the second frame 2010 and the second filter kernel 2015 may vary.

A second feature map 2030 may be generated through a convolution operation between sample values of the second frame 2010 and samples of the second filter kernel 2015. The size of the second feature map 2030 may also be 4x4, which is equal to the size of the second frame 2010.

In FIG. 20, portions P indicated by dotted lines outside the second frame 2010 are padding areas, and the convolution processing unit 1810 may pad the second frame 2010 in order to generate the second feature map 2030 having the same size as the second frame 2010. The padding areas may have a value of 0, but are not limited thereto.

Among samples of the second filter kernel 2015, any one sample may have a value of -1, and the other samples may have a value of 0. As described above, the positions of the samples having a value of -1 in the second filter kernels may be different from each other.

The convolution operation may be performed between the second filter kernel 2015 and the samples in the second frame 2010 while shifting the second filter kernel 2015 according to a stride (in FIG. 20, the stride is 1).

In an embodiment, the second feature map 2030 corresponding to the second filter kernel 2015 may be generated through a convolution operation between the samples in the second frame 2010 and the samples of the second filter kernel 2015.

The plurality of second filter kernels may correspond to motion vector candidates corresponding to the samples of the first frame 1910. Any one of the motion vector candidates may be determined as a motion vector for each sample of the first frame 1910.

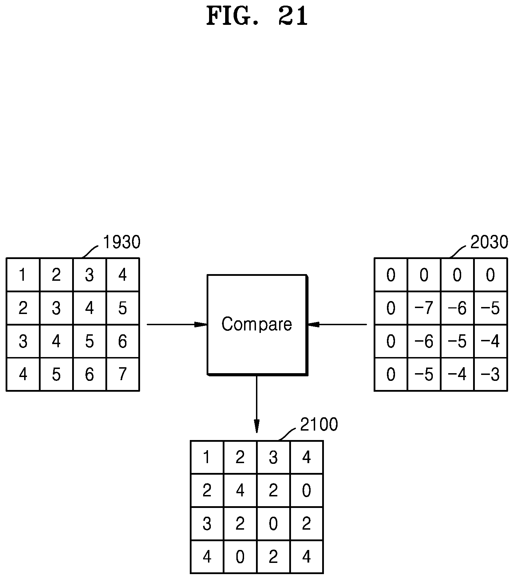

FIG. 21 is a diagram for describing a method of obtaining a difference map 2100 between the first feature map 1930 and the second feature map 2030.

The comparison unit 1820 may generate the difference map 2100 between samples of the first feature map 1930 and samples of the second feature map 2030.

When comparing the first feature map 1930 with the second feature map 2030, the comparison unit 1820 may compare samples at the same position with each other. In a process of deriving the difference map 2100 between the first feature map 1930 and the second feature map 2030, an absolute value of a value obtained by adding the uppermost-leftmost sample value of the first feature map 1930, i.e., 1, to the uppermost-leftmost sample value of the second feature map 2030, i.e., 0, may be allocated as the uppermost-leftmost sample value of the difference map 2100. In addition, an absolute value of a value obtained by adding the sample value at the right of the uppermost-leftmost sample of the first feature map 1930, i.e., 2, to the sample value at the right of the uppermost-leftmost sample of the second feature map 2030, i.e., 0, may be allocated as the sample value at the right of the uppermost-leftmost sample of the difference map 2100. Finally, an absolute value of a value obtained by adding the lowermost-rightmost sample value of the first feature map 1930, i.e., 7, to the lowermost-rightmost sample value of the second feature map 2030, i.e., -3, may be allocated as the lowermost-rightmost sample value of the difference map 2100.

The sample values of the difference map 2100 may indicate how similar the samples of the first frame 1910 are to the samples at the same positions in the second frame 2010 and the samples therearound.

Because the second feature map 2030 is generated from the second filter kernel 2015 in which the uppermost-leftmost sample value is -1, that a sample value at a particular position in the difference map 2100 is small may mean that a motion vector of a sample at the particular position in the first frame 1910 is highly likely to be the second filter kernel 2015 in which the uppermost-leftmost sample value is -1. However, as described above, in order to prevent an inaccurate motion vector due to noise, the pooling processing unit 1830 may perform pooling on the difference map 2100.

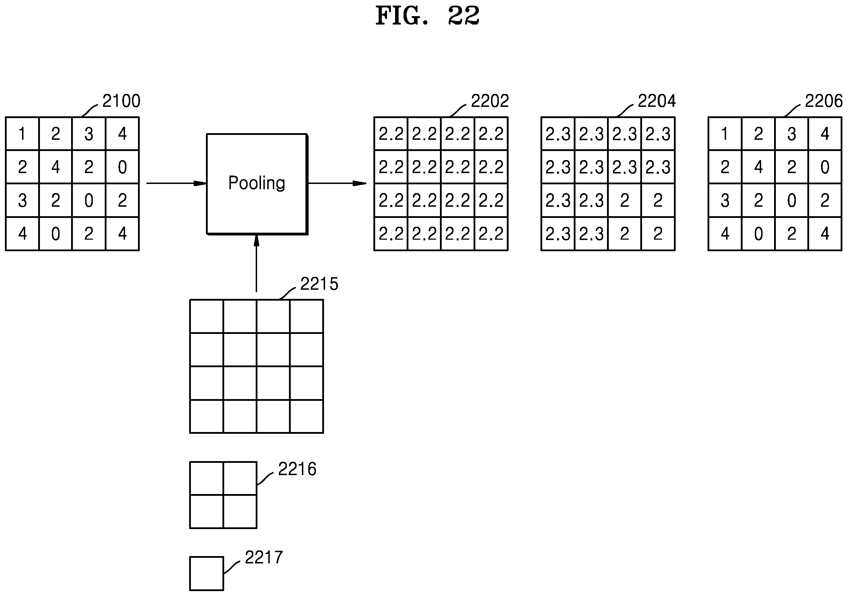

FIG. 22 is a diagram for describing pooling on the difference map 2100.

The pooling processing unit 1830 performs pooling on the difference map 2100, based on the filter kernel 2215 having a first size, the filter kernel 2216 having a second size, and a filter kernel 2217 having a third size. FIG. 22 illustrates average pooling.

In Figure 22, the first size is 4 (or 4x4), the second size is 2 (or 2x2), and the third size is 1 (or 1x1).

By pooling the difference map 2100 through a filter kernel having a size of 4 according to a stride of 4, a third feature map 2202 in which sample values are equal to the average value of the sample values in the difference map 2100 may be generated.

In addition, by pooling the difference map 2100 through a filter kernel having a size of 2 according to a stride of 2, a fourth feature map 2204 in which sample values are equal to the average values of four sample values in the difference map 2100 may be generated.

In addition, by pooling the difference map 2100 through a filter kernel having a size of 1 according to a stride of 1, a fifth feature map 2206 in which sample values are equal to the sample values in the difference map 2100, respectively, may be generated.

The sizes of the filter kernels 2215, 2216, and 2217 illustrated in FIG. 22 are only an example, and when the sizes of the filter kernels used in pooling are different from each other, the number and sizes of the filter kernels may vary.

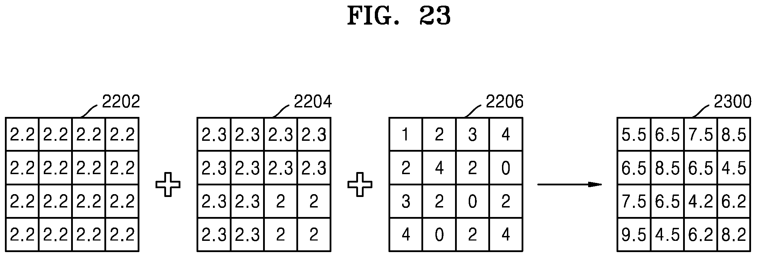

FIG. 23 is a diagram for describing a method of combining the third feature map 2202, the fourth feature map 2204, and the fifth feature map 2206 that are obtained through pooling.

The combination unit 1840 may generate a modified difference map 2300 by combining the third feature map 2202, the fourth feature map 2204, and the fifth feature map 2206.

In FIG. 23, it is assumed that weights applied to the third feature map 2202, the fourth feature map 2204, and the fifth feature map 2206 are all 1. However, as described above, the weights applied to the third feature map 2202, the fourth feature map 2204, and the fifth feature map 2206 may be variously determined.

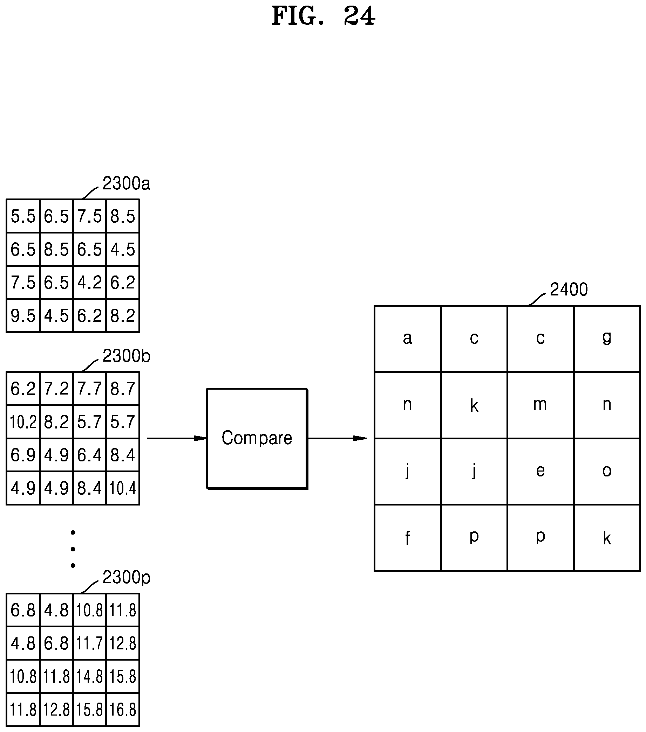

FIG. 24 is a diagram for describing a method of determining motion vectors from modified difference maps 2300a to 2300p.

The process of obtaining one modified difference map 2300 is described above with reference to FIGS. 19 to 23, but as a plurality of second filter kernels are used in a convolution operation with the second frame, the same number of modified difference maps 2300a to 2300p as the number of the plurality of second filter kernels may be obtained.

The motion vector determination unit 1850 may identify minimum samples for each position by comparing the sizes of samples at the same position in the modified difference maps 2300a to 2300p. In other words, the motion vector determination unit 1850 may identify samples for each position having the smallest size from among samples at the same position in the modified difference maps 2300a to 2300p.

For example, the motion vector determination unit 1850 may identify samples having the smallest size for each position from the position (0,0) to the position (3, 3) of the modified difference maps 2300a to 2300p. Referring to the modified difference map 2300a, the modified difference map 2300b, and the modified difference map 2300p illustrated in FIG. 24, among the uppermost-leftmost samples (i.e., the samples at the position (0,0)) of the modified difference map 2300a, the modified difference map 2300b, and the modified difference map 2300p, the sample value of the uppermost-leftmost sample of the modified difference map 2300a, i.e., 5.5, is the smallest, and thus, the uppermost-leftmost sample of the modified difference map 2300a may be identified as the uppermost-leftmost sample having the smallest size. In addition, among the lowermost-rightmost samples (i.e., the samples at the position (3,3)) of the modified difference map 2300a, the modified difference map 2300b, and the modified difference map 2300p, the sample value of the lowermost-rightmost sample of the modified difference map 2300a, i.e., 8.2, is the smallest, and thus, the lowermost-rightmost sample of the modified difference map 2300a may be identified as the lowermost-rightmost sample having the smallest size.

The motion vector determination unit 1850 may identify the modified difference maps including the minimum samples identified for the respective positions, and determine the second filter kernels used to generate the second feature maps corresponding to the identified modified difference maps, as motion vectors for the respective positions.

For example, when the uppermost-leftmost sample having the smallest size among the uppermost-leftmost samples of the modified difference maps 2100 is included in a particular modified difference map, the motion vector determination unit 1850 may determine the second filter kernel used to generate the second feature map corresponding to the particular modified difference map, as a motion vector of the uppermost-leftmost sample of the first frame 1910.

Among the uppermost-leftmost samples (i.e., the samples at the position (0,0)) of the modified difference map 2300a, the modified difference map 2300b, and the modified difference map 2300p, the sample value of the uppermost-leftmost sample of the modified difference map 2300a, i.e., 5.5, is the smallest, and thus, a motion vector corresponding to the uppermost-leftmost sample of the first frame may be determined as the second filter kernel used to generate the second feature map corresponding to the modified difference map 2300a. In addition, among the lowermost-rightmost samples (i.e., the samples at the position (3,3)) of the modified difference map 2300a, the modified difference map 2300b, and the modified difference map 2300p, the sample value of the lowermost-rightmost sample of the modified difference map 2300a, i.e., 8.2, is the smallest, and thus, a motion vector corresponding to the lowermost-rightmost of the first frame may be determined as the second filter kernel used to generate the second feature map corresponding to the modified difference map 2300a.

As illustrated in FIG. 24, the motion vector determination unit 1850 may obtain the second filter kernels corresponding to the respective samples of the first frame 1910, as motion vectors. Each motion vector map 2400 illustrated in FIG. 24 indicates an identification value of the second filter kernel determined as the motion vector corresponding to each position.

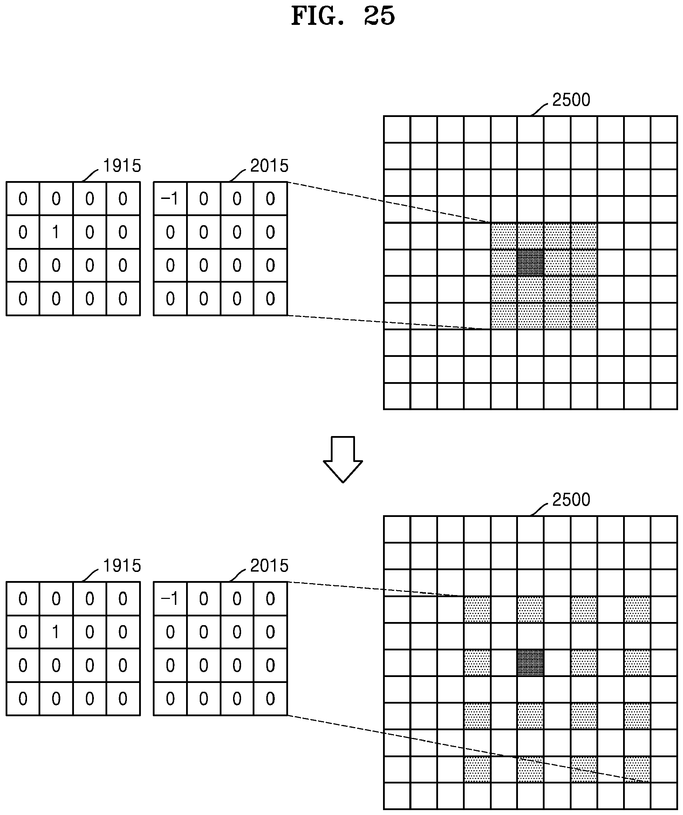

Meanwhile, in an embodiment, the convolution processing on the first frame 1910 based on the first filter kernel and the convolution processing on the second frame 2010 based on the plurality of second filter kernels may include dilated convolution processing. This will be described with reference to FIG. 25.

FIG. 25 is a diagram illustrating samples in a frame used in a convolution operation with the first filter kernel 1915 and the second filter kernel 2015.

Although FIG. 25 illustrates only one second filter kernel 2015 for simplicity of illustration, that a plurality of second filter kernels are used for the convolution operation with the second frame may be the same as described above.

The convolution processing unit 1810 may determine samples in a frame 2500 (a first frame or a second frame) used for the convolution operation with the first filter kernel 1915 and the second filter kernel 2015 to be adjacent to each other. That the samples are adjacent to each other means that the distance between neighboring samples is 1. Performing a convolution operation on the samples adjacent to each other in the frame 2500 may be referred to as general convolution processing.

In an embodiment, the convolution processing unit 1810 may determine samples in the frame 2500 used for the convolution operation with the first filter kernel 1915 and the second filter kernel 2015 to be spaced apart from each other. That the samples are spaced apart from each other may mean that the distance between neighboring samples is greater than 1. That the distance between one sample and another neighboring sample is greater than 1 may mean that one or more other samples are between the one sample and the other sample. Performing a convolution operation on the samples spaced apart from each other in the frame 2500 may be referred to as dilated convolution processing.

In FIG. 25, the shaded samples in the frame 2500 indicate samples used in the convolution operation with the first filter kernel 1915 and the second filter kernel 2015, and these samples may be located adjacent to each other as illustrated in the upper part of FIG. 25, or may be located spaced apart from each other as illustrated in the lower part of FIG. 25.

By performing dilated convolution processing on the first frame and the second frame, the convolution processing unit 1810 may use samples located farther away from a collocated sample in the second frame when determining the motion vector of the current sample.

In an embodiment, the convolution processing unit 1810 may perform dilated convolution processing on the first frame and the second frame when the sizes of the first frame and the second frame are greater than or equal to a predetermined size, and may perform general convolution processing on the first frame and the second frame when the sizes of the first frame and the second frame are less than the predetermined size.

Hereinafter, a neural network 2600 configured to calculate weights for combining feature maps generated through pooling will be described with reference to FIG. 26.

FIG. 26 is a diagram for describing a method of training the neural network 2600 to output weights for combining feature maps obtained through pooling.

The neural network 2600 may include one or more convolutional layers. The neural network 2600 may receive a first frame and a second frame, and output a plurality of preliminary weights by processing the first frame and the second frame with a preset weighting value.

FIG. 26 illustrates that a first preliminary weight, a second preliminary weight, a the third preliminary weight are output from the neural network 2600, which is for a case where three filter kernels having different sizes are used for pooling. That is, when a plurality of third feature maps, a plurality of fourth feature maps, and a plurality of fifth feature maps are generated through pooling, the neural network 2600 may output a first preliminary weight to be applied to the plurality of third feature maps, a second preliminary weight to be applied to the plurality of fourth feature maps, and a third preliminary weight to be applied to the plurality of fifth feature maps. When a plurality of third feature maps and a plurality of fourth feature maps are generated through pooling, the neural network 2600 may be configured to output a first preliminary weight and a second preliminary weight.

When the first preliminary weight, the second preliminary weight, and the third preliminary weight are output from the neural network 2600, a plurality of third feature maps, the plurality of third feature maps, the plurality of fourth feature maps, and the plurality of fifth feature maps generated through pooling may be weighted-summed in a motion prediction process 260 according to the first preliminary weight, the second preliminary weight and the third preliminary weight. In addition, motion vectors corresponding to samples in the first frame may be obtained from modified difference maps that are results of the weighted-summing.

The neural network 2600 may output first preliminary weights to be applied to samples in each third feature map. Similarly, the neural network 2600 may output second preliminary weights to be applied to samples in each fourth feature map, and output third preliminary weights to be applied to samples in each fifth feature map.

A motion compensation process 2604 may be applied to the second frame according to the motion vectors corresponding to the samples in the first frame. The second frame may be modified to be similar to the first frame through the motion compensation process 2604.

First loss information corresponding to a difference between the motion-compensated second frame and the first frame may be used for training the neural network 2600. The first loss information may include at least one of an L1-norm value, an L2-norm value, a structural similarity (SSIM) value, and a peak signal-to-noise-ratio-human vision system (PSNR-HVS) value, a multiscale SSIM (MS-SSIM) value, a variance inflation factor (VIF) value, a video multimethod assessment fusion (VMAF) value, or a 1-normalized cross correlation (NCC) value, which corresponds to the difference between the first frame and the motion-compensated second frame.

In addition, second loss information and/or third loss information may be calculated from the first preliminary weight, the second preliminary weight, and the third preliminary weight.

The second loss information may indicate how much the sum of the first preliminary weight, the second preliminary weight, and the third preliminary weight differs from a predetermined threshold. The second loss information may be used to match the sum of the first preliminary weight, the second preliminary weight, and the third preliminary weight, to the predetermined threshold.

The size ratio between the first preliminary weight, the second preliminary weight, and the third preliminary weight is more important than the values of the weights. Thus, by limiting the sum of the first preliminary weight, the second preliminary weight, and the third preliminary weight to match the predetermined threshold, at least one of the first preliminary weight, the second preliminary weight, or the third preliminary weight is prevented from becoming significantly large.

The third loss information may indicate how small negative values of the first preliminary weight, the second preliminary weight, and the third preliminary weight are. The third loss information limits the first preliminary weight, the second preliminary weight, and the third preliminary weight to have positive values. As described above, a difference map may indicate how different the samples of the first feature map are from the samples of the second feature map. When a negative weight is applied to any of a third feature map, a fourth feature map, and a fifth feature map generated through pooling on a difference map, the characteristics of the difference map may not be properly reflected in a modified difference map, and thus, the first preliminary weight, the second preliminary weight, and the third preliminary weight are limited to positive values.

In an embodiment, the second loss information and the third loss information may be calculated according to Equation 2 and Equation 3, respectively.

[Equation 2]

$$Second\ loss\ information = \frac{1}{N}\sum_{i=1}^{N}|k - (\alpha_i + \beta_i + \gamma_i)|$$

[Equation 3]

$$Third\ loss\ information = \frac{1}{N}\sum_{i=1}^{N}r(-\alpha_i) + r(-\beta_i) + r(-\gamma_i)$$

In Equation 2, $\alpha$, $\beta$, and $\gamma$ denote a first preliminary weight, a second preliminary weight, a the third preliminary weight, respectively, and i denotes an index of a sample. k denotes a predetermined threshold. Referring to Equation 2, it may be seen that, as the difference between k and the sum of the first preliminary weight, the second preliminary weight, and the third preliminary weight increases, the second loss information increases.

In Equation 3, r() denotes a relu function. r(-$\alpha$) outputs -$\alpha$ when $\alpha$ is negative, and outputs 0 when $\alpha$ is positive. Through Equation 3, it may be seen that, when $\alpha$, $\beta$, and $\gamma$ are all positive numbers, the third loss information is calculated as 0, and when $\alpha$, $\beta$, and $\gamma$ are negative numbers, the third loss information increases as the values of $\alpha$, $\beta$, and $\gamma$ decrease.

The neural network 2600 may update weighting values in the neural network 2600 such that final loss information calculated from at least one of the first loss information, the second loss information, or the third loss information is reduced or minimized.

The neural network 2600 may determine the first preliminary weight, the second preliminary weight, and the third preliminary weight, which result in minimal final loss information, as the first weight, the second weight, and the third weight to be applied to the third feature maps, the fourth feature maps, and the fifth feature maps, respectively.

In an embodiment, the neural network 2600 may be pre-trained according to a first training frame and a second training frame. In detail, the neural network 2600 may process the first training frame and the second training frame with preset weighting values, and output a first preliminary weight, a second preliminary weight, and a third preliminary weight. In addition, a training device (e.g., the image processing device 1800 or an external server) may obtain a motion-compensated second training frame through the motion compensation process 2604 on the second training frame, based on motion vectors output in a motion prediction process 2602. The neural network 2600 may update internal weighting values according to first loss information calculated from the first training frame and the motion-compensated second training frame, and second loss information and/or third loss information calculated from the first preliminary weight, the second preliminary weight and the third preliminary weight. The neural network 2600 may update the weighting values such that final loss information is reduced or minimized. Thereafter, when a first frame and a second frame are input to the neural network 2600, the neural network 2600 may process the first frame and the second frame according to the weighting values optimized through the training, and output a first weight, a second weight, and a third weight.

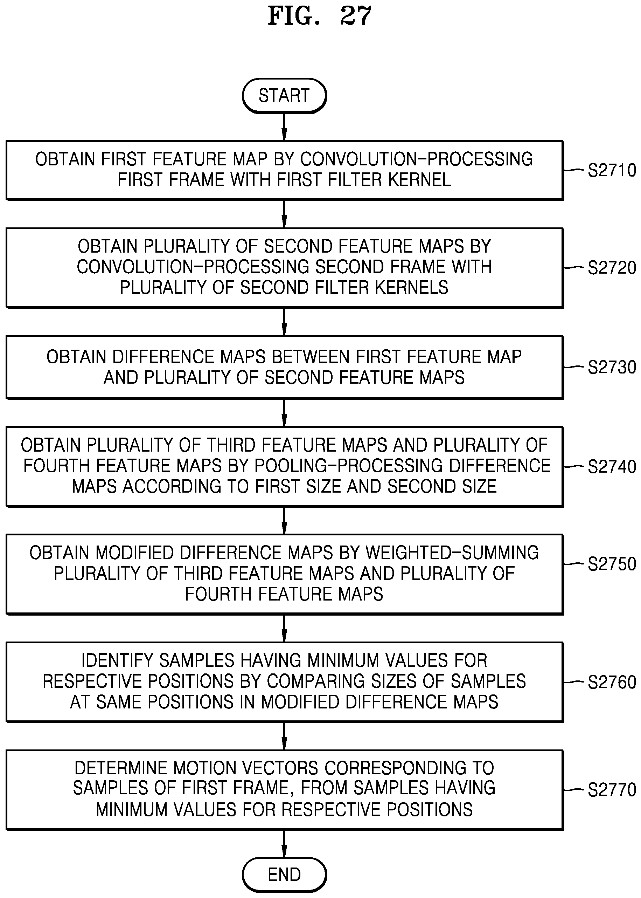

FIG. 27 is a flowchart for describing an image processing method according to another embodiment.

In operation S2710, the image processing device 1800 obtains a first feature map corresponding to a first filter kernel by convolution-processing a first frame with the first filter kernel. In an embodiment, the image processing device 1800 may omit operation S2710.

In operation S2720, the image processing device 1800 obtains a plurality of second feature maps corresponding to a plurality of second filter kernels by convolution-processing a second frame with the plurality of second filter kernels.

In operation S2730, the image processing device 1800 obtains difference maps between the first feature map and the plurality of second feature maps. The number of difference maps may be equal to the number of second feature maps.

In operation S2740, the image processing device 1800 obtains a plurality of third feature maps and a plurality of fourth feature maps by pooling the difference maps according to different sizes, for example, by using a filter kernel having a first size and a filter kernel having a second size.

The number of third feature maps and the number of fourth feature maps may be equal to the number of difference maps.

In operation S2750, the image processing device 1800 obtains a plurality of modified difference maps by weighted-summing the plurality of third feature maps and the plurality of fourth feature maps. The number of modified difference maps may be equal to the number of difference maps.

In operation S2760, the image processing device 1800 identifies samples having the minimum values for respective positions by comparing the sizes of samples at the same positions in the modified difference maps.

In operation S2770, the image processing device 1800 determines motion vectors corresponding to the samples of the first frame, from the samples having the minimum values for the respective positions. In an embodiment, the image processing device 1800 may identify modified difference maps including the samples having the minimum values for the respective positions, and determine the second filter kernels used to generate the second feature maps corresponding to the identified modified difference maps, as motion vectors for the respective positions.

Meanwhile, the embodiments of the present disclosure described above may be written as a computer-executable program, and the written program may be stored in a machine-readable storage medium.

The machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the non-transitory storage medium may include a buffer in which data is temporarily stored.

According to an embodiment, methods according to various embodiments disclosed herein may be included in a computer program product and then provided. The computer program product may be traded as commodities between sellers and buyers. The computer program product may be distributed in the form of a machine-readable storage medium (e.g., a compact disc read-only memory (CD-ROM)), or may be distributed online (e.g., downloaded or uploaded) through an application store (e.g., Play Store™) or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

The technical spirit of the present disclosure has been described with reference to preferred embodiments of the present disclosure, but is not limited to the embodiments of the present disclosure, and various modifications and changes may be made by those of skill in the art without departing from the scope of the present disclosure.

**Claims**

1. An image processing device comprising:
   a memory storing one or more instructions; and
   a processor configured to execute the one or more instructions stored in the memory to:

   obtain a plurality of difference maps between a first frame or a first feature map corresponding to the first frame, and a plurality of second feature maps corresponding to a second frame;
   obtain a plurality of third feature maps and a plurality of fourth feature maps by performing pooling processes on the plurality of difference maps according to a first size and a second size;
   obtain a plurality of modified difference maps by weighted-summing the plurality of third feature maps and the plurality of fourth feature maps;
   identify any one collocated sample by considering sizes of sample values of collocated samples of the plurality of modified difference maps corresponding to a current sample of the first frame; and
   determine a filter kernel used to obtain the second feature map corresponding to the modified difference map including the identified collocated sample, as a motion vector of the current sample.

2. The image processing device of claim 1, wherein a first stride used in the pooling process based on the first size and a second stride used in the pooling process based on the second size are different from each other.

3. The image processing device of claim 2, wherein the first size and the first stride are greater than the second size and the second stride.

4. The image processing device of claim 3, wherein the first size and the first stride are k (k is a natural number), and the second size and the second stride are k/2.

5. The image processing device of claim 1, wherein the processor is further configured to execute the one or more instructions to obtain, from a neural network, a first weight applied to the plurality of third feature maps, and a second weight applied to the plurality of fourth feature maps.

6. The image processing device of claim 1, wherein the processor is further configured to execute the one or more instructions to:

   obtain a plurality of modified difference maps by weighted-summing the plurality of third feature maps and the plurality of fourth feature maps, based on a first preliminary weight and a second preliminary weight that are output from the neural network;
   determine motion vectors corresponding to samples of the first frame, from the plurality of modified difference maps; and
   motion-compensate the second frame based on the determined motion vectors, and

   the neural network is trained based on first loss information corresponding to a difference between the motion-compensated second frame and the first frame.

7. The image processing device of claim 6, wherein the neural network is trained further based on second loss information indicating how much a sum of the first preliminary weight and the second preliminary weight differs from a predetermined threshold.

8. The image processing device of claim 6, wherein the neural network is trained further based on third loss information indicating how small negative values of the first preliminary weight and the second preliminary weight are.

9. The image processing device of claim 1, wherein the pooling processes comprise an average pooling process or a median pooling process.

10. The image processing device of claim 1, wherein the first feature map is obtained through convolution processing on the first frame based on a first filter kernel, and
the plurality of second feature maps are obtained through convolution processing on the second frame based on a plurality of second filter kernels.

11. The image processing device of claim 10, wherein a distance between the samples of the first frame on which a convolution operation with the first filter kernel is performed, and a distance between samples of the second frame on which a convolution operation with the plurality of second filter kernels is performed, are greater than 1.

12. The image processing device of claim 10, wherein, in the first filter kernel, a sample corresponding to the current sample of the first frame has a preset first value, and other samples have a value of 0.

13. The image processing device of claim 12, wherein, in the plurality of second filter kernels, any one sample has a preset second value, and other samples have a value of 0, and
positions of samples having the second value in the plurality of second filter kernels are different from each other.

14. The image processing device of claim 13, wherein a sign of the preset first value and a sign of the preset second value are opposite to each other.

15. An image processing method performed by an image processing device, the image processing method comprising:

obtaining a plurality of difference maps between a first frame or a first feature map corresponding to the first frame, and a plurality of second feature maps corresponding to a second frame;
obtaining a plurality of third feature maps and a plurality of fourth feature maps by performing pooling processes on the plurality of difference maps according to a first size and a second size;
obtaining a plurality of modified difference maps by weighted-summing the plurality of third feature maps and the plurality of fourth feature maps;
identifying any one collocated sample by considering sizes of sample values of collocated samples of the plurality of modified difference maps corresponding to a current sample of the first frame; and
determining a filter kernel used to obtain the second feature map corresponding to the modified difference map including the identified collocated sample, as a motion vector of the current sample.

# FIG. 1

# FIG. 2

PREVIOUS OUTPUT FRAME $(Y_{t-1})$

PREVIOUS FEATURE MAP $(S_{t-1})$

PREVIOUS FRAME $(X_{t-1})$

CURRENT FRAME $(X_t)$

220 — MOTION COMPENSATION

PREDICTION FRAME $(X_{t\_pred})$
PREDICTION OUTPUT FRAME $(Y_{t\_pred})$
PREDICTION FEATURE MAP $(S_{t\_pred})$

210 — MOTION PREDICTION

MOTION VECTOR

240 — GATING

DIFFERENCE VALUE

230 — WEIGHT DERIVATION

WEIGHT

WEIGHTED PREDICTION FRAME $(X'_{t\_pred})$
WEIGHTED PREDICTION OUTPUT FRAME $(Y'_{t\_pred})$
WEIGHTED PREDICTION FEATURE MAP $(S'_{t\_pred})$

CURRENT FRAME $(X_t)$

260-1 — FIRST SUB-NEURAL NETWORK

262 — FUSION

264 — CNN · · · · CNN

CURRENT FRAME $(X_t)$
WEIGHTED PREDICTION FRAME $(X'_{t\_pred})$

INTERMEDIATE OUTPUT FRAME $(Y_{t\_int})$
INTERMEDIATE FEATURE MAP $(S_{t\_int})$

260-2 — SECOND SUB-NEURAL NETWORK

250

260-n — N-TH SUB-NEURAL NETWORK

CURRENT OUTPUT FRAME $(Y_t)$
CURRENT FEATURE MAP $(S_t)$

# FIG. 3

# FIG. 4

# FIG. 5

# FIG. 6

# FIG. 7

430

| b2 | e2 | f2 |
|----|----|----|
| e2 | f2 | i2 |
| h2 | e2 | i2 |

# FIG. 8

PREVIOUS FRAME $(X_{t-1})$ → Convolution 810 → PREDICTION FRAME $(X_{t\_pred})$

| 1 | 0 | 0 |
|---|---|---|
| 0 | 0 | 0 |
| 0 | 0 | 0 |

| 0 | 1 | 0 |
|---|---|---|
| 0 | 0 | 0 |
| 0 | 0 | 0 |

| 0 | 0 | 1 |
|---|---|---|
| 0 | 0 | 0 |
| 0 | 0 | 0 |

| 0 | 0 | 0 |
|---|---|---|
| 0 | 0 | 0 |
| 0 | 0 | 1 |

815

# FIG. 9

# FIG. 10

```
        900                        950                         1000
┌──────┬──────┬──────┐    ┌──────┬──────┬──────┐    ┌───────┬───────┬───────┐
│  b2  │  e2  │  f2  │    │  w1  │  w2  │  w3  │    │ b2*w1 │ e2*w2 │ f2*w3 │
├──────┼──────┼──────┤    ├──────┼──────┼──────┤    ├───────┼───────┼───────┤
│  e2  │  f2  │  i2  │ ⊗  │  w4  │  w5  │  w6  │ ⇒  │ e2*w4 │ f2*w5 │ i2*w6 │
├──────┼──────┼──────┤    ├──────┼──────┼──────┤    ├───────┼───────┼───────┤
│  h2  │  e2  │  i2  │    │  w7  │  w8  │  w9  │    │ h2*w7 │ e2*w8 │ i2*w9 │
└──────┴──────┴──────┘    └──────┴──────┴──────┘    └───────┴───────┴───────┘
```

# FIG. 11

# FIG. 12

EP 4 383 696 A1

**FIG. 13**

EP 4 383 696 A1

# FIG. 14

FIG. 15

# FIG. 16

# FIG. 17

START

IDENTIFY, IN PREVIOUS FRAME, PREDICTION SAMPLE CORRESPONDING TO CURRENT SAMPLE OF CURRENT FRAME — S1710

GENERATE PREDICTION FRAME OF CURRENT FRAME FROM PREVIOUS FRAME — S1720

DERIVE WEIGHT BY COMPARING SAMPLE VALUE OF CURRENT SAMPLE WITH SAMPLE VALUE OF PREDICTION SAMPLE — S1730

APPLY WEIGHT TO SAMPLE OF PREDICTION FRAME — S1740

PROCESS CURRENT FRAME AND WEIGHTED PREDICTION FRAME THROUGH NEURAL NETWORK — S1750

END

**FIG. 18**

EP 4 383 696 A1

# FIG. 19

1910

P

| 1 | 2 | 3 | 4 |
| 2 | 3 | 4 | 5 |
| 3 | 4 | 5 | 6 |
| 4 | 5 | 6 | 7 |

Convolution

1930

| 1 | 2 | 3 | 4 |
| 2 | 3 | 4 | 5 |
| 3 | 4 | 5 | 6 |
| 4 | 5 | 6 | 7 |

1915

| 0 | 0 | 0 | 0 |
| 0 | 1 | 0 | 0 |
| 0 | 0 | 0 | 0 |
| 0 | 0 | 0 | 0 |

# FIG. 20

2010

| 7 | 6 | 5 | 4 |
|---|---|---|---|
| 6 | 5 | 4 | 3 |
| 5 | 4 | 3 | 2 |
| 4 | 3 | 2 | 1 |

P

Convolution

2015

| −1 | 0 | 0 | 0 |
|----|---|---|---|
| 0 | 0 | 0 | 0 |
| 0 | 0 | 0 | 0 |
| 0 | 0 | 0 | 0 |

2030

| 0 | 0 | 0 | 0 |
|---|----|----|----|
| 0 | −7 | −6 | −5 |
| 0 | −6 | −5 | −4 |
| 0 | −5 | −4 | −3 |

# FIG. 21

# FIG. 22

EP 4 383 696 A1

## FIG. 23

# FIG. 24

2300a

| 5.5 | 6.5 | 7.5 | 8.5 |
| 6.5 | 8.5 | 6.5 | 4.5 |
| 7.5 | 6.5 | 4.2 | 6.2 |
| 9.5 | 4.5 | 6.2 | 8.2 |

2300b

| 6.2 | 7.2 | 7.7 | 8.7 |
| 10.2 | 8.2 | 5.7 | 5.7 |
| 6.9 | 4.9 | 6.4 | 8.4 |
| 4.9 | 4.9 | 8.4 | 10.4 |

Compare

2300p

| 6.8 | 4.8 | 10.8 | 11.8 |
| 4.8 | 6.8 | 11.7 | 12.8 |
| 10.8 | 11.8 | 14.8 | 15.8 |
| 11.8 | 12.8 | 15.8 | 16.8 |

2400

| a | c | c | g |
| n | k | m | n |
| j | j | e | o |
| f | p | p | k |

# FIG. 25

2500

1915

| 0 | 0 | 0 | 0 |
| 0 | 1 | 0 | 0 |
| 0 | 0 | 0 | 0 |
| 0 | 0 | 0 | 0 |

2015

| −1 | 0 | 0 | 0 |
| 0 | 0 | 0 | 0 |
| 0 | 0 | 0 | 0 |
| 0 | 0 | 0 | 0 |

2500

1915

| 0 | 0 | 0 | 0 |
| 0 | 1 | 0 | 0 |
| 0 | 0 | 0 | 0 |
| 0 | 0 | 0 | 0 |

2015

| −1 | 0 | 0 | 0 |
| 0 | 0 | 0 | 0 |
| 0 | 0 | 0 | 0 |
| 0 | 0 | 0 | 0 |

**FIG. 26**

# FIG. 27

START

OBTAIN FIRST FEATURE MAP BY CONVOLUTION-PROCESSING FIRST FRAME WITH FIRST FILTER KERNEL — S2710

OBTAIN PLURALITY OF SECOND FEATURE MAPS BY CONVOLUTION-PROCESSING SECOND FRAME WITH PLURALITY OF SECOND FILTER KERNELS — S2720

OBTAIN DIFFERENCE MAPS BETWEEN FIRST FEATURE MAP AND PLURALITY OF SECOND FEATURE MAPS — S2730

OBTAIN PLURALITY OF THIRD FEATURE MAPS AND PLURALITY OF FOURTH FEATURE MAPS BY POOLING-PROCESSING DIFFERENCE MAPS ACCORDING TO FIRST SIZE AND SECOND SIZE — S2740

OBTAIN MODIFIED DIFFERENCE MAPS BY WEIGHTED-SUMMING PLURALITY OF THIRD FEATURE MAPS AND PLURALITY OF FOURTH FEATURE MAPS — S2750

IDENTIFY SAMPLES HAVING MINIMUM VALUES FOR RESPECTIVE POSITIONS BY COMPARING SIZES OF SAMPLES AT SAME POSITIONS IN MODIFIED DIFFERENCE MAPS — S2760

DETERMINE MOTION VECTORS CORRESPONDING TO SAMPLES OF FIRST FRAME, FROM SAMPLES HAVING MINIMUM VALUES FOR RESPECTIVE POSITIONS — S2770

END

## INTERNATIONAL SEARCH REPORT

| International application No. |
| --- |
| **PCT/KR2022/012599** |

**A.    CLASSIFICATION OF SUBJECT MATTER**

**H04N 5/14**(2006.01)i; **G06T 7/246**(2017.01)i; **G06N 3/08**(2006.01)i; **G06N 3/04**(2006.01)i

According to International Patent Classification (IPC) or to both national classification and IPC

**B.    FIELDS SEARCHED**

Minimum documentation searched (classification system followed by classification symbols)

H04N 5/14(2006.01); G06N 3/04(2006.01); G06N 3/063(2006.01); G06T 3/00(2006.01); H04N 19/105(2014.01); H04N 19/176(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 특징 맵(feature map), 차이 맵(difference map), 풀링(pooling), 가중 합(weighted sum), 변형 차이 맵(modified difference map), 필터 커널(filter kernel), 움직임 벡터(motion vector)

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0011322 A (SAMSUNG ELECTRONICS CO., LTD.) 01 February 2021 (2021-02-01)<br>    See paragraphs [0041]-[0048] and [0065]; claim 1; and figures 2a-2h. | 1-15 |
| A | TEED, Zachary et al. RAFT: Recurrent All-Pairs Field Transforms for Optical Flow. arXiv:2003.12039v1. pp. 1-19, March 2020.<br>    See pages 1-19; and figures 1-2. | 1-15 |
| A | KR 10-2020-0007250 A (SK TELECOM CO., LTD.) 22 January 2020 (2020-01-22)<br>    See paragraphs [0113]-[0117]; and figures 7-8. | 1-15 |
| A | KR 10-2021-0036715 A (SAMSUNG ELECTRONICS CO., LTD. et al.) 05 April 2021 (2021-04-05)<br>    See claims 1-11. | 1-15 |
| A | PARK, Junheum et al. BMBC:Bilateral Motion Estimation with Bilateral Cost Volume for Video Interpolation. arXiv:2007.12622v1. pp. 1-16, July 2020.<br>    See pages 1-16. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 November 2022** | **24 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/012599**

| Patent document cited in search report | | | Publication date (day/month/year) | Patent family member(s) | | | Publication date (day/month/year) |
|---|---|---|---|---|---|---|---|
| KR | 10-2021-0011322 | A | 01 February 2021 | CN | 112288790 | A | 29 January 2021 |
| | | | | US | 2021-0027480 | A1 | 28 January 2021 |
| KR | 10-2020-0007250 | A | 22 January 2020 | KR | 10-2019-0117352 | A | 16 October 2019 |
| | | | | KR | 10-2020-0000543 | A | 03 January 2020 |
| | | | | KR | 10-2020-0000548 | A | 03 January 2020 |
| | | | | KR | 10-2021-0134555 | A | 10 November 2021 |
| | | | | KR | 10-2021-0134556 | A | 10 November 2021 |
| | | | | US | 11265540 | B2 | 01 March 2022 |
| | | | | US | 2021-0021823 | A1 | 21 January 2021 |
| | | | | US | 2022-0141462 | A1 | 05 May 2022 |
| | | | | WO | 2019-194425 | A1 | 10 October 2019 |
| KR | 10-2021-0036715 | A | 05 April 2021 | CN | 112561045 | A | 26 March 2021 |
| | | | | EP | 3798921 | A1 | 31 March 2021 |
| | | | | US | 2021-0097403 | A1 | 01 April 2021 |

Form PCT/ISA/210 (patent family annex) (July 2022)